(19) Europäisches Patentamt
European Patent Office
Office européen des brevets

(11) Veröffentlichungsnummer: **0 254 678 B1**

(12) # EUROPÄISCHE PATENTSCHRIFT

(45) Veröffentlichungstag der Patentschrift: **19.09.90**

(51) Int. Cl.[5]: **C08G 59/00**, G01N 23/223

(21) Anmeldenummer: **87810388.6**

(22) Anmeldetag: **08.07.87**

(54) **Kontinuierliches Verfahren zur Herstellung von Epoxidharzen mit niedrigem EHC-Gehalt aus chlorhaltigem Ausgangsmaterial und Anlage zur automatischen Steuerung des Verfahrens.**

(30) Priorität: **14.07.86 CH 2815/86**

(43) Veröffentlichungstag der Anmeldung:
**27.01.88 Patentblatt 88/4**

(45) Bekanntmachung des Hinweises auf die Patenterteilung:
**19.09.90 Patentblatt 90/38**

(84) Benannte Vertragsstaaten:
**CH DE ES GB IT LI NL**

(56) Entgegenhaltungen:
**EP-A- 0 185 622**
**DE-A- 2 233 054**

**PATENT ABSTRACTS OF JAPAN, Band 8, Nr. 147 (P-285)[1584], 10. Juli 1984; & JP-A-59 44 646 (TOKYO SHIBAURA DENKI K.K.) 13-03-1984**
**ATOMKERNENERGIE/KERNTECHNIK, Band 44, Nr. 4, Juni 1984, Seiten 266-268, München, DE; D.K. DONHOFER: "On-stream-Analyse mittels Energie-Dispersiver Röntgen-Fluoreszenz"**
**PATENT ABSTRACT OF JAPAN, Band 4, Nr. 156 (P-34)[638], 31. Oktober 1980; & JP-A-55 104 748 (PERUMERETSUKU DENKIYOKU K.K.) 11-08-1980**

(73) Patentinhaber: **CIBA-GEIGY AG, Klybeckstrasse 141, CH-4002 Basel(CH)**

(72) Erfinder: **Karlhuber, Bernhard, Riedbergstrasse 15, CH-4059 Basel(CH)**
Erfinder: **Fiaux, André,Dr., Chemin sous l'Eglise, CH-1867 Ollon(CH)**
Erfinder: **Schaffhauser, Thierry, dr., Chemin-sur-Rang 16, CH-1234 Vessy(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 254 678 B1

ACTORUM AG

**Beschreibung**

Die Erfindung betrifft ein kontinuierliches Verfahren zur Herstellung von Epoxidharzen mit niedrigem Gehalt an leicht hydrolysierbarem nichtionisch gebundenem Chlor (EHC) aus Epoxidharze bildendem chlorsubstituiertem Ausgangsmaterial, insbesondere auch aus Rohepoxidharz. Andere Aspekte der Erfindung betreffen eine Anlage zur Steuerung des genannten Verfahrens.

Bei der bekannten Produktion von Epoxidharzen weisen die Endprodukte der Epoxidation und Polymerisation gewöhnlich einen so hohen EHC-Gehalt auf, daß dem Harz dadurch eine unerwünschte elektrische Leitfähigkeit erteilt wird. Dies wirkt sich besonders nachteilig bei der Verwendung des Epoxidharzes in Korrosionsschutzüberzügen, z.B. bei Kataphoreseharzen und auch sehr störend bei Anwendung auf dem Gebiet der Elektrotechnik und Elektronik aus. Insbesondere ist elektrische Leitfähigkeit in der Praxis bei Verwendung für gedruckte Schaltungen tragende Leiterplatten völlig unzulässig und schränkt die Anwendungsmöglichkeiten für solche Epoxidharze als Plattenmaterial ernstlich ein.

Das bei der Produktion von Epoxidharzen zunächst erhaltene Rohharz enthält etwa 0,2 bis 1,5 Gew.-% an EHC. Der EHC-Gehalt besteht vorwiegend aus1,2-Chlorhydrinen der Formel

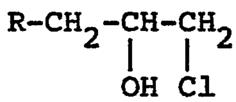

worin R einen aliphatischen oder bevorzugt einen aromatischen Rest darstellt. Das Rohharz enthält noch gewisse Mengen an unverseifbarem Chlor und ionisch gebundenem Chlor, d.h. Chlorid-Anionen in Kristallgittern.

Der Begriff "Chlor" in dieser Beschreibung und den Ansprüchen bedeutet stets "chemisch gebundenes Chlor" und niemals Chlorgas.

Der Begriff "unverseifbares" Chlor bedeutet in der folgenden Beschreibung und in den Ansprüchen "in einer organischen, aromatischen oder aliphatischen Verbindung nichtionisch" in solcher Weise gebundene Chloratome, daß sie unter den bei der Epoxidharzherstellung üblichen Reaktionsbedingungen durch Dehydrochlorierungsmittel nicht verseift oder "hydrolysiert" werden.

Ein Beispiel für solch "unverseifbar" gebundenes Chlor zeigt die folgende Formel

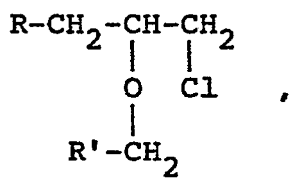

worin R einen organischen aromatischen Rest und R′ eine niedere Alkylgruppe oder Wasserstoff bedeutet.

Um Epoxidharz mit niedrigerem EHC-Gehalt zu erhalten, wird das Rohharz einer Dehydrochlorierungsbehandlung unterworfen. Als Dehydrochlorierungsmittel werden üblicherweise insbesondere Alkali- und Erdalkalihydroxide wie Natrium-, Kalium-, Lithium- oder Calciumhydroxid, Alkalisalze schwacher Säuren wie Kaliumcarbonat, Kaliumhydrogencarbonat, Natriummethylat, Kalium-n-butylat, Kalium-tert.-butylat oder quaternäre Ammoniumhydrogencarbonate der Formel

$$(R_4N)^+(HCO_3)^-,$$

in der R einen vorzugsweise niedren Alkylrest bedeutet, verwendet.

Bei der Dehydrochlorierungsbehandlung wird eine gewisse Menge EHC aus dem Rohharz unter Bildung von Salzen wie Natriumchlorid, Kaliumchlorid, Lithiumchlorid, Calciumchlorid, quaternäre Ammoniumchloride und dergleichen entfernt.

Jedoch ist die genaue Dosierung des Dehydrochlorierungsmittels besonders während einer kontinuierlichen Behandlung sehr kritisch und nicht leicht einzuhalten. Denn in der Gleichung

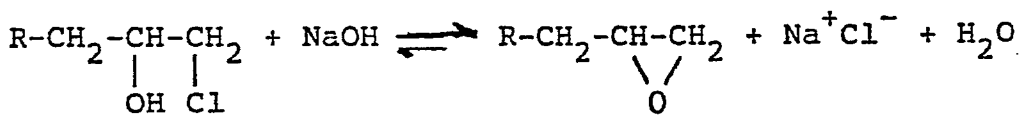

herrscht ein Gleichgewicht, welches die Erlangung eines völlig EHC-freien Produkts verhindert, und ein Überschuß an Dehydrochlorierungsmittel (z.B. NaOH) führt zur höchst unerwünschten Bildung von Polymeren, welche die nachfolgenden Behandlungsschritte wie, z.B., das Verdampfen von Flüssigkeit und

die Filtration des Endprodukts behindern. Schon der geringste Überschuß an Dehydrochlorierungsmittel löst im Harz Polymerisationsprozesse aus, die dadurch gebildeten Polymerisationsprodukte führen im Laufe der Zeit zur Verstopfung von Produktleitungen und verursachen Ausfälle von Filtern in der Produktionsanlage; vor allem beeinträchtigen sie auch die Qualität des als Endprodukt erhaltenen Epoxidharzes.

Die zuzusetzende Menge Natriumhydroxid oder eines anderen Dehydrochlorierungsmittels pro Zeiteinheit ist also sehr kritisch und sollte sorgfältig und mit großer Genauigkeit kontrolliert werden. Es wurde deshalb bereits versucht, diese Forderung zu erfüllen, indem in häufigen und regelmäßigen Intervallen, z.B. jede 90-l20 Minuten "naßchemische" Analysen manuell durchgeführt wurden, um in entnommenen Proben den Gehalt an EHC im jeweils vorliegenden Produkt zu bestimmen, das kontinuierlich der Dehydrochlorierungsbehandlung zugeführt wurde. Es ist ein ernsthafter Nachteil dieser naßchemischen Analysen, daß zahlreiche Proben entnommen werden müssen und eine Vielzahl von manuellen Arbeitsschritten erforderlich sind, um jede Probe fur den Test aufzubereiten, bei dem z.B. eine Verseifung und Titration durchgeführt werden muß; das gesamte Kontrollverfahren wird dadurch aufwendig und verlangt einen beträchtlichen Personalaufwand.

Noch schwerwiegender ist die Tatsache, daß die Analysenresultate erst mit erheblicher Verspätung zur Verfügung stehen, wozu beiträgt, daß die Analysen diskontinuierlich vorgenommen werden mussen. Eine Nachregulierung der Zugaberate an Dehydrochlorierungsmittel kann also immer erst mit erheblicher Verzögerung nach einer eingetretenen Änderung des EHC-Gehalts durchgeführt werden, während in der Zwischenzeit ein Unter- oder Überschuß an Dehydrochlorierungsmittel seine schädigende Wirkung auf das Produkt ausübt. Hinzu kommt, daß die Ergebnisse der erwähnten, auf zahlreichen diskontinuierlich entnommenen Proben beruhenden Analysenmethode ziemlich ungenau sind.

Um daher die unerwünschten Polymerisationsnebenprozesse mit Sicherheit auszuschließen, wird bei den bekannten kontinuierlichen Verfahren ein Restgehalt an leicht hydrolysierbarem Chlor von 500-700 ppm (0,05-0,07 Gewichts-%) in Kauf genommen. Restgehalte an EHC von 200 ppm oder gar noch darunter sind beim kontinuierlichen Verfahren nur mit großem Aufwand durch zusätzliche kostspielige EHC-Entfernungsverfahren zu erreichen, während der an sich heute nicht mehr gewünschte Chargenbetrieb es immerhin gestattete, Epoxidharze mit einem EHC-Gehalt von nicht mehr als 70 ppm zu erzielen. Jedoch kommen solche Epoxidharze wegen ihrer hohen Herstellungskosten für eine marktgerechte Massenherstellung, z.B. von Leiterplatten fur elektrische Schaltungen nicht mehr in Frage.

Ein Verfahren zur Herabsetzung des EHC-Gehalts nach der Europäischen Patentanmeldung der Anmelderin mit der Publikationsnummer l85 622 A2 verlangt die Verwendung beträchtlicher Mengen Cellulose als systemfremdem Material.

Während es also eine wirtschaftliche Notwendigkeit ist, auf dem elektrischen Gebiet einsetzbare Epoxidharze im kontinuierlichen Verfahren herzustellen, genügen gleichwohl große Mengen der danach hergestellten Endprodukte nicht den vom Kunden verlangten Spezifikationen.

Die vorliegende Erfindung löst daher die Aufgabe, ein kontinuierliches Verfahren sowie eine für die Durchführung dieses Verfahrens geeignete Anlage für die Herstellung von Epoxidharzen mit einem niedrigen Gehalt an leicht hydrolisierbarem nichtionisch gebundenem Chlor (EHC) aus den eingangs aufgeführten Ausgangsmaterialien zu verwirklichen, das eine automatisch steuerbare Dehydrochlorierungsphase umfaßt, die ein Endprodukt von sehr niedrigem EHC-Gehalt, vorzugsweise von nicht mehr als l50±50 ppm, optimal jedoch unter l00 ppm liefert.

Ein weiteres Ziel der Erfindung ist die Schaffung eines Verfahrens mit den vorangehend beschriebenen Vorteilen, welches eine besonders einfache Anlage zu seiner Durchführung benötigt.

Ein weiteres Ziel der Erfindung ist die Schaffung eines Verfahrens der oben beschriebenen Art und Vorteile, bei dem es nicht erforderlich ist, große Mengen systemfremden Materials in dasselbe zwecks Erhalt eines Endproduktes von niedrigem EHC-Gehalt einzuführen.

Ein weiteres Ziel der Erfindung ist die Schaffung einer Apparatur zur Steuerung des Verfahrens und Erzielung der oben aufgeführten Vorteile, die vor allem mit zufriedenstellender Genauigkeit arbeitet und insbesondere die Dehydrochlorierungsphase mit wesentlich größerer Genauigkeit steuert als dies bei den bekannten Verfahren der Fall war.

Ein weiteres Ziel der Erfindung ist schließlich die Schaffung einer Apparatur mit den letztgenannten Eigenschaften, die besonders schnell und mit hoher Empfindlichkeit auf Schwankungen im Gesamtchlorgehalt des Reaktionsgemisches reagiert und befähigt ist, die gemessenen Ergebnisse wiederzugeben und entsprechende Maßnahmen einzuleiten, so daß das Verfahren in zufriedenstellendem Umfang automatisiert werden kann.

Die genannte Aufgabe wird gelöst und die genannten Ziele und Zwecke werden erreicht bei einem Verfahren der eingangs beschriebenen Art, das zumindest während der Hauptphase desselben automatisch gesteuert wird und die im kennzeichnenden Teil der Patentanspruche l bzw. 7, aufgeführten Verfahrensschritte umfaßt.

Bevorzugte Ausführungsarten des Verfahrens nach der Erfindung weisen mindestens eines der in den Unteransprüchen 2-7 genannten Verfahrensmerkmale auf. Dem eigentlichen kontinuierlichen Verfahren nach der Erfindung sind vorteilhaft die folgenden Tests des Ausgangsmaterials vorausgegangen:

(a) In einer Probe des Ausgangsmaterials muß der Gehalt desselben an ionisch gebundenem Chlor (also der Gehalt an Chloranionen) manuell chemisch, z.B. durch Titration bestimmt werden;

(b) eine Probe des gleichen Materials sollte durch eine Trennschicht, z. B. ein Berylliumfenster, hindurch einer Fluoreszenz erregenden radioaktiven Strahlung ausgesetzt werden, wobei der Gesamtchlorgehalt als Summe des Gehalts an unverseifbarem Chlor, leicht verseifbarem Chlor (EHC) und ionisch gebundenem Chlor ermittelt wird, falls nicht die letzte Komponent bereits entfernt wurde;

(c) eine Probe des gleichen Ausgangsmaterials wird unter sanften Reaktionsbedingungen verseift, worauf die Menge des dadurch neu gebildeten ionisch gebundenen Chlors durch Titration bestimmt wird. Der hierbei gefundene Wert wird zum unter (a) gefundenen hinzugezählt und die Summe vom unter (b) ermittelten Gesamtchlorgehalt abgezogen, wodurch der Gehalt an unverseifbarem Chlor im Ausgangsmaterial erhalten wird, der unter den genannten Bedingungen im kontinuierlichen Verfahren nach der Erfindung konstant bleiben muß.

Ein Kontrollsystem nach der Erfindung zur Steuerung des EHC-Gehaltes im während des Verfahrens entstehenden Epoxidharz umfaßt die im Anspruch 8 aufgeführten Merkmale. Bevorzugte Ausführungsformen des Kontrollsystems sind Gegenstand der Ansprüche 9-13.

Die im Verfahren nach der Erfindung genannten Verfahrensschritte (a), (b) und (c) brauchen nur ausgeführt zu werden, wenn das kontinuierliche Verfahren zum ersten Mal mit einem neuen Posten an epoxidbildendem Ausgangsmaterial in Gang gesetzt wird, um die Menge jeder der verschiedenen Arten von unterschiedlich gebundenem Chlor in dem neuen Ausgangsmaterial zu bestimmen. In dem Maße wie dieser erste Posten in der kontinuierlichen, automatisch gesteuerten Dehydrochlorierungsphase aufgebracht wird, können zusätzliche Mengen an Ausgangsmaterial in das Verfahren laufend eingegeben werden, und es ist dann nicht mehr nötig, die Verfahrensschritte (a) bis (c) zu wiederholen, da jede Veränderung im EHC-Gehalt des sich bildenden Epoxidharzes sogleich am Ende der Dehydrochlorierungsphase, wie im folgenden im einzelnen erläutert, erfaßt wird.

Auch müssen die Schritte (a), (b) und (c) wiederholt werden, wenn nach vollständiger Beendigung der Epoxidharzherstellung nach einem bestimmten Verfahrenstyp, z.B. dem Taffy-Typ-Verfahren, zu einem anderen Verfahrenstyp, z.B. dem Advancement-Verfahren übergegangen wird. Natürlich darf der Verfahrenstyp normaler Weise nicht während einer kontinuierlichen Dehydrochlorierungsphase geändert werden.

Die Steuerung der kontinuierlichen Phase im Verfahren nach der Erfindung umfaßt die Schritte (i)-(vii) (Anspruch 1) und beruht auf unserer Erkenntnis, daß bei Konstanthaltung der Verfahrensparameter, also der Temperatur, der Durchflußleistung, der Rührbedingungen, des Druckes und der Zusammensetzung des Reaktionsgemisches während der kontinuierlichen Phase der Gehalt an unverseifbarem Chlor und der Gehalt an ionisch gebundenem Chlor beide konstant bleiben. Daher werden Veränderungen im Gesamtchlorgehalt während der kontinuierlichen Phase durch Schwankungen im EHC-Gehalt in der durchströmenden Reaktionsmischung während der Dehydrochlorierungsphase verursacht, die durch die Schwankungen im Gesamtchlorgehalt repräsentativ wiedergegeben werden.

Also geben gemessene Schwankungen während der kontinuielichen Kontrolle des Gesamtgehalts an chemisch gebundenem Chlor im unmittelbar nach Beendigung der Dehydrochlorierungsphase gebildeten Epoxidharz mit repräsentativer Genauigkeit Schwankungen im EHC-Gehalt wieder, und Signale eines Detektors des Röntgenfluoreszenz-Analysators in dem Kontrollsystem nach der Erfindung können dafür verwendet werden, nicht nur kontinuierlich den EHC-Gehalt des Epoxidharzes unmittelbar nach der Bildung des letzteren zu registrieren, sondern diese Signale können auch kontinuierlich zur Steuerung der Zufuhrpumpe für Dehydrochlorierungsmittel, z.B. Natriumhydroxid, weitergegeben werden und hierdurch die Zuflußrate an diesem Mittel zum Reaktionsgemisch laufend korrigieren, so daß das Verfahren vollautomatisch ablaufen kann.

Wurde z.B. festgestellt, daß ein neuer Posten an Ausgangsmaterial einen Gehalt von l300 ppm an unverseifbarem Chlor und 2 ppm an ionisch gebundenem Chlor sowie einen röntgenfluoreszenzanalytisch festgestellten Gesamtchlorgehalt von l800 ppm aufwies, so betrug der Gehalt an EHC 498 ppm. Eine Änderung im EHC-Gehalt, z.B. auf 5l8 ppm wird dann als Änderung des Gesamtchlorgehalts auf l820 ppm bestimmt. Auf der Grundlage dieser Änderung des Gesamtchlorgehalts wird dann die dem Verfahren laufend zugeführte Menge, z.B. an Natriumhydroxid, prompt um den der Steigerung des Gesamtchlorgehalts um 20 ppm stöchiometrisch entsprechenden Betrag erhöht. Es wird hierdurch möglich, die Zuflußrate an Dehydrochlorierungsmittel mit einer Genauigkeit von etwa l0 bis l5 ppm den Schwankungen im Gesamtchlorgehalt kontinuierlich anzupassen.

Die Messung des Gesamtchlorgehalts erfolgt durch eine Meßzelle in der Steuerungsapparatur nach der Erfindung während einer bestimmten Meßzeit, die normaler Weise kürzer ist als die kontinuierliche Dehydrochlorierungsphase, die im Verfahren nach der Erfindung zur Aufarbeitung eines vorhandenen Postens an Epoxidharz bildendem Ausgangsmaterialerforderlich ist. Eine solche Meßzeit dauert vorzugsweise 3 bis 5 und nicht mehr als l0 Minuten, die Meßzelle muß dann vorzugsweise während zwei Minuten gespült werden, worauf die Messung des Gesamtchlorgehalts im frisch gebildeten Epoxidharz wieder aufgenommen wird. Angenommen, die erwähnte Aufarbeitung schließt eine Dehydrochlorierungsphase von einer Stunde ein, um einen vorhandenen Posten Startmaterial zu verarbeiten, so bedeutet dies etwa 5 bis l2 Meßzeiten und dazwischen stattfindende Spülzeiten während des Gesamtablaufs der kontinuierlichen Phase. Dies genügt jedoch, um die gesamte Phase hinreichend zu kontrollieren und die Herstellung eines Epoxidharzes von zufriedenstellend niedrigem EHC-Gehalt zu gewährleisten. In der Praxis kann bei einer solchen Aufarbeitung die kontinuierliche Phase des Verfahrens volle sechs 24-Stundentage oder sogar noch länger dauern.

Um eine möglichst kurze Verweilzeit der zur Messung erforderlichen Menge Epoxidharz in der Meßzelle zu erreichen, passiert das Harz die Zelle unter einem Überdruck von mindestens I bar.

Die Trennschicht, durch die hindurch die Bestrahlung des durch die Meßzelle passierenden Epoxidharzes stattfindet, besteht vorzugsweise aus einem dünnen, weiter unten im einzelnen beschriebenen Fenster von geeignetem Material.

Die Kontrollapparatur, bzw. das Kontrollsystem nach der Erfindung umfaßt neben der oben erwähnten Meßzelle und einer Quelle für radioaktive Strahlung, wie z.B. einer Röntgen- oder Radionuklidquelle, eine Detektoreinrichtung, welche die Gesamtchlorfluoreszenz mißt und das resultierende Signal als Dosierungsparameter an eine Steuereinheit der Pumpe für kontinuierliche Zufuhr an Dehydrochlorierungsmittel in den Reaktionsfluß übergibt. Unter "radioaktiv" wird hier nichtkorpuskulare Strahlung verstanden.

Nach jeder Meßzeit wird wie gesagt ein Spülintervall eingeschoben, das vorzugsweise nicht weniger als zwei Minuten dauert und während dem die Meßzelle mit einem Spülmittel, wie z.B. Methylisobutylketon, Toluol, Aceton, Methanol oder Isopropanol, gespült wird.

Es empfiehlt sich, nach einer oder mehreren Meßzeiten die Meßzelle, wie weiter unten beschrieben, wieder zu eichen, wobei als Eichflüssigkeit vorzugsweise Methylisobutylketon oder Isopropanol verwendet wird, das mit einer chlorhaltigen, in dem betreffenden Lösungsmittel löslichen Substanz in zwei verschiedenen Konzentrationen, von denen eine 0 sein kann, dotiert ist.

Um eine hinreichend niedrige Viskosität des durch die Meßzelle in der Apparatur nach der Erfindung passierenden Epoxidharzes aufrechtzuerhalten, ist vorzugsweise eine Beheizung der Zelle vorgesehen, die diese auf einer Temperatur von mindestens 65°C halten kann.

Epoxidharz bildende Ausgangsmaterialien, die sich zur Verwendung im Verfahren nach der Erfindung besonders eignen, sind im Unteranspruch 9 aufgeführt. Zur Verwendung im Verfahren nach der Erfindung geeignete Dehydrochlorierungsmittel wurden bereits weiter oben aufgeführt.

Es ist bereits bekannt, die Konzentration z.B. von chemisch gebundenem Chlor mittels Röntgenfluoreszenzanalyse zu messen (siehe DE-OS 22 33 054); die darin beschriebene Apparatur verwendet ein zwischen der Probe und einer Radionuklidquelle, z.B. dem Isotop Fe-55, befindliches Fenster aus metallisierter Kunststoffolie. Ein Röntgenfluoreszenz-Analysator vom Nichtdispersionstyp, wie er in der japanischen Patentanmeldung 55-104 748(A), (Patent Abstracts of Japan, Vol.4, No. 156 (P-34) (638) vom 31.10. 1980) beschrieben ist, umfaßt eine Vakuum-Röntgenkammer mit einem Meßfenster aus Beryllium, auf welches die zu untersuchende Probe gelegt wird.

Ein Verfahren zur Bestimmung des Chlorgehalts in Epoxidharzen wird insbesondere in der japanischen Patentanmeldung 59-44 646(A), (Patent Abstracts of Japan, Vol.8, No. 147(P-285) (1584) vom 10.7.1984) beschrieben, Dabei wird ein Germanium-Einkristall zum Ausscheiden der Röntgeneigenstrahlung des Chlors (Cl)Kα -Linie verwendet.

Weiter wird in einem Artikel von Dieter K. Donhoffer vom Juni 1984 in "Atomkernenergie/Kerntechnik", Vol.44, No.4, Seiten 266-268 (München) ein Verfahren und eine Anlage zur Verwendung von mit Hilfe einer Radionuklidquelle erzeugter Energiedispersions-Röntgenfluoreszenz zur Erregung bei Anwendung auf die "On-stream " Analyse beschrieben. Dabei wird u.a. der Chlorgehalt von Oligomeren im ELBEST-"On-stream"-Meßsystem gemessen, wobei Donhoffer den Zwischenraum zwischen der Oberfläche einer Probe und einem Zählrohr in der Apparatur mit Stickstoff spülen mußte, um die Störwirkung des in der Luft vorhandenen Argons zu beseitigen.

Die Verwendung der Röntgenfluoreszenz-Analyse bei der Bestimmung des Gesamtgehalts an gebundenem Chlor während der kontinuierlichen Kontrolle der Dehydrochlorierungsphase im Verfahren zur Herstellung von Epoxidharz nach der Erfindung warf jedoch eine Anzahl von anderen Problemen auf, die gelöst werden mußten, bevor praktisch verwendbare Daten erhalten wurden, die sich zur Steuerung der kontinuierlichen Zufuhr an Dehydrochlorierungsmittel in der Reaktionsphase nach Schritten (i) bis (v) eigneten.

Ein erstes ernsthaftes Problem entstand durch die Neigung des Harzes, unter der Einwirkung von Röntgenfluoreszenzstrahlung zu polymerisieren, was zur Bildung von Polymerisatschichten führt, die sich auf dem Meßfenster der Kontrollapparatur niederschlagen und die Meßergebnisse verfälschen. Ein weiteres ernsthaftes Problem wird bei der Wahl des Materials für das Meßfenster im Röntgenfluoreszenz-Analysator aufgeworfen. Das Fenstermaterial darf das Fluoreszenzsignal nicht zu stark absorbieren. Auch muß das Fenster trotz seiner geringen Dicke genügend widerstandsfähig sein, um neben dem Sog des Vakuums außerhalb der Meßzelle noch zusätzlich den Druck des vorbeiströmenden Harzes in der Meßzelle aushalten zu können. Ein Vakuum muß in der Kammer des Geräts angewendet werden, weil Luft im Zwischenraum zwischen der Probe auf der einen Seite des Meßfensters und der Detektorvorrichtung und dem Zählrohr im Inneren der Kammer, die neben einer Detektorvorrichtung die Meßzelle und eine Röntgenröhre enthält, das Fluoreszenzsignal stören würde, da eine Spektrallinie des Argons so nahe der Chlorlinie liegt, daß störende Interferenzen nicht zu vermeiden sein würden. Auch beträgt der vom fließenden Harz auf das Fenster ausgeübte Überdruck vorzugsweise I bar, wobei die Verweilzeit des Harzes im Meßgerät immer noch so weit wie möglich verkürzt wird. Schließlich muß das

Fenstermaterial gegen Korrosion durch das Harz wie auch durch die verschiedenen anderen Substanzen, die daran zum Messen, Spülen und Eichen vorbeigeleitet werden, und natürlich auch gegen langandauernde Bestrahlung aus einer Röntgen- oder Radionuklidquelle beständig sein.

Daher umfaßt ein Kontrollsystem zum Messen des Gesamtchlorgehalts in dem in der Dehydrochlorierungsphase des Verfahrens nach der Erfindung hergestellten Epoxidharz, eine Quelle für radioaktive Strahlung,eine Meßzelle, deren Wandung ein Meßfenster vorzugsweise aus Beryllium enthält und auf welches die Strahlung der genannten Quelle gerichtet wird, an die Meßzelle angeschlossene Leitungen, um einen Strom von Epoxidharz im fließfähigen Zustand durch die Meßzelle zu leiten, sowie eine Detektorvorrichtung zum Messen der in den im durch die Zelle passierenden Epoxidharz vorhandenen Chloratomen durch die radioaktive Strahlung angeregten Fluoreszenz.

Der Begriff "radioaktive Strahlung" wird in dieser Anmeldung so verstanden, daß er Röntgenstrahlen mitumfaßt, die geeignet sind, eine Fluoreszenz des im Epoxidharz vorhandenen Chlors zu erregen. Die Strahlungsquelle kann daher eine Röntgenröhre oder ein Radionuklid sein.

Die Detektorvorrichtung umfaßt vorzugsweise einen Monochromator und einen Proportionalzähler. Auch kann sie einen Halbleiter als Detektor enthalten. Das Berylliumfenster der Meßzelle weist eine Dicke von vorzugsweise 0,05 bis 0,5 mm, am besten um 0,l mm auf.

Weitere Einzelheiten des Kontrollsystems nach der Erfindung ergeben sich aus der folgenden Beschreibung desselben im Zusammenhang mit den beigefügten Zeichnungen; in diesen zeigt:

Fig. l schematisch eine bevorzugte Ausführungsform des Kontrollsystems für die Steuerung des Verfahrens nach der Erfindung;

Fig. 2 eine Draufsicht auf eine in der Ausführungsform des Kontrollsystems nach Fig. l verwendete Meßzelle nach der Erfindung;

Fig. 3 einen Querschnitt durch die in Fig. 2 gezeigte Meßzelle längs einer darin durch III-III angedeuteten Ebene;

Fig. 4 einen Längsschnitt durch die gleiche Meßzelle längs einer in Fig. 2 durch IV-IV angedeuteten Ebene;

Fig. 5 ein Blockschema, welches eine bevorzugte Anordnung des in eine Produktionsanlage für das Verfahren nach der Erfindung integrierten Kontrollsystems nach Fig. l zeigt;

Fig. 6 ist eine graphische Darstellung des Verlaufs der Kurve des EHC-Gehalts von Epoxidharz bei in bekannter Weise erfolgender manueller Kontrolle der Herstellung des Harzes mit dem Ziel, den EHC-Gehalt auf l50 ppm zu senken; und

Fig. 7 ist eine graphische Darstellung der gleichen Kurve wie in Fig. 6, beim Bestreben, ein Epoxidharz gleich niedrigen EHC-Gehalts herzustellen, aber gesteuert mit Hilfe einer Kontrollapparatur nach der Erfindung.

In der in Fig. l gezeigten schematischen Darstellung eines erfindungsgemäßen Kontrollsystems deutet der Pfeil $A_1$ den Eingang und der Pfeil $A_5$ den Ausgang einer Hauptleitung an, durch welche Rohepoxidharz in fließfähigem Zustand oder in Form einer Lösung strömt, wobei eine kleine Teilmenge, deren Gesamtchlorgehalt gemessen werden soll, durch eine Zweigleitung zu einer im Gehäuse H untergebrachten Meßanordnung geleitet wird. Die Meßanordnung umfaßt eine Meßzelle Z, eine Röntgenröhre XR und eine Detektorvorrichtung D.

Die vom Eingang $A_1$ zum Ausgang $A_5$ führende Hauptleitung wird durch den Strömungsregler $V_1$ und die Zweigleitung durch das Kontrollventil $V_2$ geöffnet oder geschlossen. Die so gesteuerte Zweigleitung vom Eingang $A_1$ zum Ausgang $A_5$ führt über eine Förderpumpe $P_1$ zur Meßzelle Z im Gehäuse H und aus der Meßzelle und dem Gehäuse heraus über ein Ventil $V_6$ zurück in die Hauptleitung, während ein Ventil $V_7$, das eine Kreislaufleitung steuert, geschlossen ist. An das Gehäuse H ist eine Vakuumpumpe $P_2$ zum Evakuieren des Gehäuseinneren G angeschlossen.

Bei Öffnen des Ventils $V_2$ und genügend reduziertem Durchlaß durch den Strömungsregler $V_1$ wird Epoxidharz vom Eingang $A_1$ in die Zweigleitung gepumpt, wobei die Ventile $V_3$, $V_4$ und $V_5$ geschlossen sein müssen, und von der Pumpe $P_1$ mit einem gewünschten Überdruck von mindestens l bar in die Meßzelle Z gedrückt und aus dieser bei geöffnetem Ventil $V_6$ und geschlossenem Ventil $V_7$ wieder in die Hauptleitung befördert.

In der Meßzelle Z fließt das Harz an der Innenseite des Fensters F vorbei und wird dabei durch Bestrahlung durch Röntgenstrahlen aus der Röntgenröhre XR, die sich außerhalb der Meßzelle Z im Gehäuseinneren G befindet, angeregt. Die für Chlor typischen Fluoreszenzstrahlen werden selektiv und quantitativ von der Detektorvorrichtung D aufgenommen. Die Meßzelle Z ist mit einer Heizung 9 (siehe Fig. 3) versehen, um ihre Temperatur auf über 65°C zu halten. Die Innenwandung des Gehäuses H ist mit Bleiplatten zur Abschirmung der Strahlenquelle ausgekleidet. Übliche Ausrüstungsorgane zur Kontrolle von Temperatur und Druck innerhalb des Durchlasses für das Harz durch die Meßzelle sind gleichfalls vorgesehen, aber in Fig. 1 der Übersicht halber weggelassen.

An Stelle der Röntgenröhre XR kann auch ein Radionuklid verwendet werden; jedoch wird die Verwendung einer Röntgenröhre vorgezogen, da sie eine stärkere Chlorfluoreszenz, die an sich schon schwach ist, als ein Radionuklid wie z.B. Fe-55 verursacht. Im Zusammenhang mit der Detektorvorrichtung D, die einen Monochromator M, z.B. einen Germanium-Einkristall umfaßt, wird vorzugsweise ein

Proportionalzähler PC vorgesehen. Bei Verwendung eines Halbleiterdetektors an Stelle des Proportionalzählers PC kann der Monochromator M weggelassen werden. Jedoch muß der Halbleiterdetektor laufend mit flüssiger Luft gekühlt werden, um eine angesichts der niedrigen Energie (nur 2,6 keV) der Cl/Kα -Linie des Chlors hinreichende Resolution zu erzielen.

Der durch die Detektorvorrichtung gebildete Röntgenfluoreszenz-Analysator kann vom Dispersions- oder Nichtdispersionstyp sein. Sehr gute Resultate wurden mit einem wellenlängendispersiven Analysator erzielt.

Die in Fig. 1 erzielte Kontrollanordnung wird mit einer üblichen Auswertungseinheit (Produktionscomputer, nicht gezeigt) verbunden, in welcher die bekannten Gehalte an unverseifbarem Chlor und ionisch gebundenem Chlor, die vorher durch die oben erwähnten Verfahrensschritte (a) bis (c) bestimmt wurden, vom kontinuierlich durch die Meßanordnung gelieferten Gesamtchlorgehalt abgezogen werden, wodurch kontinuierlich Signale des EHC-Gehalts geliefert werden, die zur Kontrolle und kontinuierlichen Korrektur der Zufuhr von Dehydrochlorierungsmittel in das Verfahren dienen.

Um die Mengen an unverseifbarem gebundenem Chlor und ionisch gebundenem Chlor (Chloridanionen) im gebildeten Epoxidharz wirklich mit einem genügenden Grad an Genauigkeit konstant zu halten, müssen die Zusammensetzung und Qualität (Reinheit) des Ausgangsmaterials, z.B. Epichlorhydrin oder Bisphenol-A, die Verfahrensart und die oben genannten Reaktionsparameter wie Temperatur und Reaktionsdauer genau konstant gehalten werden. Das Meßsignal besteht aus Einzelimpulsen, die jeweils von einem auf dem Detektor auftreffendem Photon ausgelöst werden. Diese Impulse sind statistisch verteilt. Um die hieraus resultierenden Schwankungen auszugleichen, müssen die Impulse während einer gewissen Zeit akkumuliert werden. Dies kann z.B. mit einem Computer auf digitaler Basis realisiert werden. Die Meßgenauigkeit ist proportional der Wurzel aus der Anzahl der akkumulierten Impulse, d.h. sie steigt mit der Wurzel aus der Akkumulationszeit. Das Meßsignal steht also diskontinuierlich zur Verfügung.

Eine Alternative besteht darin, die Impulse mit einem Frequenz/Spannungskonverter in eine Spannung umzuwandeln. Die raschen statistischen Schwankungendieser Spannung können dann anschließend mit einem Tiefpaßfilter geglättet werden, wodurch ein kontinuierliches Meßsignal erhalten wird.

Wie bereits weiter oben erwähnt, lösen radioaktive Strahlungen, die freie Radikale erzeugen, in Epoxidharzen Poly merisationsprozesse aus. Das Auftreten dieser unerwünschten Polymerisationsprozesse kann durch die nachstehend beschriebenen Maßnahmen eingeschränkt oder unterdrückt werden.

Eine erste Maßnahme besteht darin, daß der Druck und damit die Geschwindigkeit des durchströmenden Harzes durch die Meßzelle Z mittels der Pumpe $P_1$ erhöht wird, so daß dessen Verweilzeit in der Meßzelle Z stark herabgesetzt wird. In der Praxis hat sich ein Druck von I bar als ausreichend für diesen Zweck erwiesen.

Eine zweite Maßnahme besteht darin, die Meßzelle Z so auszubilden, daß die Strömung des Harzes auch bei erhöhtem Druck laminar bleibt und daß im Strömungsweg des Harzes innerhalb der Zelle keine toten Winkel vorhanden sind. Eine bevorzugte Meßzellenkonstruktion, die solchen Anforderungen genügt, wird weiter unten erläutert.

Die beiden oben beschriebenen Maßnahmen reichen jedoch nicht aus, um jegliche Polymerisation im die Zelle Z passierenden Harz auszuschließen. Es ist daher unvermeidlich, daß sich im Verlaufe der Messungen Polymerisationsprodukte an den Wänden der Meßzelle Z absetzen, die besonders störend sind, wenn sie sich auf dem Meßfenster F anlagern, da hierdurch die Fluoreszenzsignale verfälscht werden. Eine Polymerisatschicht mit einer Dicke von nur 3 bis 5 Micro-m als Ablagerung auf dem Meßfenster kann 90% des Fluoreszenzsignals absorbieren.

Deshalb wird als dritte Maßnahme der Strömungsweg des Harzes in der Meßzelle Z von Zeit zu Zeit gereinigt. Hierzu wird bei offenem Ventil $V_1$ und geschlossenem Ventil $V_2$ das Ventil $V_3$ geöffnet, während die Ventile $V_4$, $V_5$ und $V_6$ geschlossen sind und das Ventil $V_7$ geöffnet ist. Hierdurch wird eine Spülflüssigkeit mittels der Pumpe $P_1$ durch den Eingang $A_2$ in die Zweigleitung gepumpt, passiert die Meßzelle Z, wobei im Strömungsweg an der Unterseite des Fensters F abgesetztes Polymerisat aufgelöst wird und die verbrauchte Spülflüssigkeit alsdann entweder aus dem System durch das Ventil $V_7$ entfernt oder auch in den Eingang $A_2$ bis zum völligen Verbrauch im Kreislauf zurückgeführt oder schließlich gegebenenfalls auch in den Epoxidharzherstellungsprozeß eingeleitet wird. Eine Wiederverwendung des Spülmittels bei der Harzherstellung ist besonders gegeben, wenn das Spülmittel ein bevorzugtes Lösungsmittel wie Methylisobutylketon, Toluol, Aceton, Methanol oder Isopropanol ist. Meß- und Spülperioden in der Meßzelle lösen sich in regelmäßigen Abständen ab.

Als weitere Maßnahme zur Optimierung der Meßresultate empfiehlt es sich schließlich, von Zeit zu Zeit eine Eichung der Meßvorrichtung vorzunehmen. Zu diesem Zweck werden im Anschluß an eine Spülperiode zwei Eichmessungen durchgeführt, wobei zuerst bei geschlossenen Ventilen $V_2$, $V_3$, $V_5$ das Ventil $V_4$ geöffnet wird. Die Förderpumpe $P_1$ pumpt dann aus dem Eingang $A_3$ eine Referenzlösung mit vorbestimmter Chlorkonzentration $|Cl|_1$ in die Meßzelle Z und wieder über das geöffnete Ventil $V_7$ aus dem System. Hierauf wird nach Schließen des Ventils $V_4$ das Ventil $V_5$ geöffnet und über den Eingang $A_4$ eine zweite Referenzlösung mit vorbestimmter Chlorkonzentration $|Cl|_2$ durch die Meßzelle Z hindurch und wieder aus dem System über das geöffnete Ventil $V_7$ hinausbefördert. Durch das Messen der Chlorkonzentrationen dieser beiden Referenzlösungen werden zwei Meßpunkte erhalten, welche eine Eichgerade für den vorgesehenen Meßbereich festlegen.

In den Figuren 2 bis 4 ist nun eine bevorzugte Ausführungsform einer Meßzelle Z in vergrößertem Maßstab gezeigt. Die Meßzelle Z umfaßt einen Deckel l mit mittiger Öffnung la, die durch das Meßfenster 3 verschlossen ist und zwei Verstärkungsleisten oder Haltestangen 2, die sich parallel miteinander über die Deckelöffnung la hinweg erstrecken und den Zellendeckel l einerseits gegen den im Gehäuseinneren G herrschenden Unterdruck und andererseits gegen den in der Meßzelle Z an der Unterseite des Meßfensters 3 herrschenden Überdruck des darunter vorbei fließenden Harzes versteifen. Der Deckel l wird vom Umfangsbereich der oberen Stirnfläche 4a eines Gehäusekörpers 4 getragen, der eine mittige Ausnehmung enthält, die aus der Bodenfläche 4b des Gehäusekörpers 4 und auch über eine engere mittige Öffnung l0 in der oberen Stirnfläche 4a des Gehäusekörpers 4 öffnet. Die obere Öffnung wird durch das Membranfenster 3, das durch einen in einer Ringnut in der oberen Stirnfläche 4a um die mittige Öffnung l0 herum eingesetzten O-Ring 6 abgedichtet wird, verschlossen.

Ein Leitkern 5 füllt die Ausnehmung des Gehäusekörpers 4 fast vollständig aus, läßt aber an seinem oberen Ende zwischen der Unterseite des Fensters 3 und der die Öffnung l0 umgebenden inneren Seitenwandung des Gehäusekörpers 4 einerseits und der oberen Stirnfläche 5a des Leitkerns 5 andererseits einen kreisförmigen Raum ll und zwei Kanäle l2 und l3 frei.

Der Gehäusekörper 4 und der von diesem umgebene Leitkern 5 sind mit ihren unteren Endflächen 4b und 5b auf einem Zellbodenblock 8 montiert. Ein O-Ring 6a sitzt dichtend zwischen einer oberen Ringschulter 5c des Leitkerns 5 und der Unterseite 4c der um die mittige Öffnung l0 herum an der inneren Endwandung der Ausnehmung in dem Gehäusekörpers 4 gebildeten Ringschulter. Sich radial auswärts erstreckende Bereiche der Kanäle l2 und l3 befinden sich in der Form von Nuten in der Schulter 5c des Leitkerns 5 an der Unterseite 4c der zuletzt erwähnten Schulter im Gehäusekörper 4. Die Heizvorrichtung 9 ist im Bodenblock 8 vorgesehen (Fig. 3).

Der Leitkern 5 ist mit zwei axial verlaufenden Kanälen l4 und l5 versehen, die aus seiner Schulter 5c nach oben öffnen und mit den äußeren Enden der sich radial erstreckenden Bereiche der Kanäle l2 und l3 und über diese auch mit dem freien Raum ll an der Unterseite des Meßfensters 3 frei verbunden. Die unteren offenen Enden der Kanäle l4 und l5 öffnen in axiale Kanäle l6 bzw. l7 im Bodenblock 8, die aus dessen unterer Stirnseite 8a öffnen. Das untere Ende des Kanals l6 kann mit der Leitung zur Förderung von Epoxidharz aus der Pumpe $P_1$ (Fig. l) zur Meßzelle Z, und das untere Ende des Kanals l7 mit der Leitung von der Zelle Z zum Ausgang $A_5$ oder zur durch die Ventile $V_6$ bzw. $V_7$ gesteuerten Auslaß- oder Kreislaufleitung verbunden sein.

Bei der Verwendung der Meßzelle Z zur Messung des Gesamtchlorgehalts des Epoxidharzes wird dieses durch die Pumpe $P_1$ in den Eingangskanal l6 im Bodenblock 8 der Meßzelle und aufwärts durch den axialen Kernkanal l4 und den an diesen angeschlossenen Kanal l2 in den freien Raum ll an der Unterseite des Berylliumfensters 3 gedrückt. Durch das Fenster 3 hindurch wird das vorbeifließende Harz von der Röntgenröhre XR her bestrahlt und alsdann durch den Ausgangskanal l3 und weiter durch den abwärts führenden Kernkanal l5 und den Ausgangskanal l7 im Bodenblock 8 der Meßzelle und schließlich durch die mit diesem verbundenen Leitung bei geöffnetem Ventil 6 der Zweigleitung zurück in die Hauptleitung und zum Ausgang $A_5$ gedrückt.

Der kreisförmige freie Raum ll unter dem Fenster 3 ist vorzugsweise verhältnismäßig eng, so daß eine breite Oberfläche des Harzes den Röntgenstrahlen ausgesetzt ist, während das Harz verhältnismäßig schnell durch den Raum ll hindurch in den Ausgangskanal l3 gedrückt wird, und seine Verweilzeit im freien Raum ll und überhaupt im gesamten Kanalsystem der Meßzelle Z nur eine kurze ist. Um zu gewährleisten, daß das Harz laminar durch das Kanalsystem fließt und durch tote Winkel verursachte Turbulenzen vermieden werden, ist vor allem der Umfangsrand der Schulterunterseite 4c des Gehäusekörpers 4 um die mittige Öffnung l0 herum abgerundet.

Auch kann eine glatte Strömung des Harzes durch die Kanäle l4, l5, l6 und l7 durch röhrenförmige Einsätze 7 gewährleistet werden, die die Fugen zwischen der unteren Stirnseite 5b des Leitkerns 5 und dem Bodenblock 8 überbrücken, indem sie in diese in entsprechenden Ausnehmungen eingesetzt sind und an den Fugen durch O-Ringe 6b bzw. 6c abgedichtet werden.

Da das Epoxidharz bei Zimmertemperatur eine verhältnismäßig hohe Viskosität besitzt, wird es durch das Kanalsystem in der Meßzelle Z entweder bei mit Hilfe der Heizung 9 erhöhter Temperatur oder in Form einer Lösung gedrückt. In der Praxis wurde gefunden, daß eine Beheizung der Zelle auf 65°C ausreicht.

Das Material, aus dem das Fenster 3 besteht, ist aus den weiter oben angeführten Gründen kritisch, doch kann beim Spülen oder Eichen der Meßvorrichtung ein Mylar-Fenster der im Handel erhältlichen Art einmalig verwendet werden. Zum Auswechseln des Fensters braucht nur der Deckel l vom Zellgehäuse abgenommen werden. Die bereits früher vorgeschlagenen Berylliumfenster haben zwar den Nachteil, daß sie durch schwach basisches oder schwach saures Wasser angeätzt werden. Trotzdem wurde gefunden, daß bei der Verwendung im Verfahren nach der Erfindung direkt nach Beendigung der Dehydrochlorierungsphase, wobei kein beachtenswerter Überschuß an Natriumhydroxid oder dergleichen Reagenzien in dem frisch erzeugten Rohepoxidharz vorhanden ist, da das Dehydrochlorierungsmittel ohnehin zur Vermeidung von Polymerisationen leicht unterdosiert wird, das Berylliumfenster durch das Rohharz offenbar nicht angegriffen wird. Auch wurde gefunden, daß die mechanische Festigkeit dieses Fensters auch bei längerer Verwendung in der Meßzelle vollständig angemessen war.

Im in Fig. 5 gezeigten Blockdiagram ist das Kontrollsystem bzw. die Meßanordnung nach der Erfindung in eine komplette, nur rein schematisch dargestellte Produktionsanlage für Epoxidharz eingebaut. Im Reaktor R wird das Rohharz I in einem förderbar fließfähigen Zustand oder in Lösung mit dem basischen Mittel II gemischt und die Mischung III in eine Waschstation W geleitet, in der das in der Reaktionsmischung entstandene Chlorid durch Reaktion mit dem basischen Mittel neutralisiert und herausgewaschen wird. Eine Teilmenge V des nassen Rohharzes IV aus der Waschstation wird abgezweigt und in die in Figuren I bis 4 dargestellte Meßanordnung A geleitet. Diese Meßanordnung ist mit einer Rechnereinheit SE verbunden, die aus dem Meßsignal den Gehalt an im Harz verbliebenem EHC ausrechnet und daraus ein Steuersignal für die Dosierpumpe PN ableitet. Da der Gehalt an EHC im Harz in Gewichtsprozenten angegeben wird, die Zugabe von Natriumhydroxid oder dergleichen Dehydrochlorierungsmittel aber in absoluten Mengen erfolgt, muß die stündliche Durchflußmenge bekannt sein und sehr genau konstant gehalten werden. Die Information bezüglich des EHC-Gehalts kann zusätzlich direkt in ppm auf einem Meßgerät angezeigt oder laufend durch einen mit der Rechnereinheit SE verbundenen Drucker (nicht gezeigt) ausgedruckt werden.

In der graphischen Darstellung in Fig. 6 werden über der Abszisse, auf der die Dauer (in Stunden) eines nach Beispiel I (s. weiter unten) durchgeführten Verfahrens aufgetragen ist, auf der Ordinate Werte des betreffenden EHC-Gehalts in ppm aufgeführt. Das Verfahren wurde auf einen EHC-Sollwert von I50 ppm im Epoxidharz-Endprodukt hin gesteuert. Dabei wurde die Kontrolle durch manuelle Entnahme von Proben und manuelle Analysen im Naßzustand durchgeführt, worauf bei Erhalt jedes neuen Analysenergebnisses sofort die Stellung eines die Zufuhr von Natriumlauge steuernden Ventils manuell geändert wurde.

Wie aus Fig. 6 ersichtlich ist, wichen die auf der Ordinate aufgetragenen Werte des EHC-Gehalts in wachsendem Maße von dem Sollwert von I50 ppm ab, und schienen sich ab der I2. bis 20. Stunde des Verfahrensablaufs bei einem Werte im Bereich von 300 ppm zu stabilisieren.

Die graphische Darstellung in Fig. 7, bei der ebenfalls die Verfahrenszeit in Stunden auf der Abszisse und der EHC-Gehalt in ppm auf der Ordinate aufgetragen sind, beruht auf gleicher Durchführung wie im Falle nach Fig. 6, außer daß die Kontrolle des Gesamtchlorgehalts und die Steuerung der Zufuhr von Dehydrochlorierungsmittel in der in Beispiel I beschriebenen Weise mit Hilfe einer Meßzelle und Zwischenspülen von jeweils zwei Minuten nach der Erfindung durchgeführt wurde.

Die Kurve des EHC-Gehalts in Fig. 7 zeigt eine sehr zufriedenstellende Stabilisierung desselben um den geförderten Sollwert nach der I0. Stunde des Verfahrensablaufs, die noch mehr als I5 Stunden danach anhielt.

Ein besonderer Vorteil der Kontrollapparatur bzw. Meßanordnung nach der Erfindung beruht darin, daß die von ihr ausgegebenen Signale nicht nur für die Steuerung der Zufuhr von Natriumhydroxid oder dergleichen Dehydrochlorierungsmittel dienen müssen, sondern daß sie auch zur Steuerung jedes anderen wichtigen Verfahrensparameters angewandt werden können. So können verschiedene Edukte dosiert, oder es kann die Temperatur oder der pH-Wert der Reaktionsmischung eingestellt werden. Abhängig von der beabsichtigten Anwendungsart muß die Software an den entsprechenden Kontrollalgorithmus angepaßt werden.

Mit Hilfe der Meßanordnung nach der Erfindung ist es nunmehr möglich, Rechtzeit-Information über den EHC-Gehalt von Epoxidharz zu erlangen und sofort auf jede Abweichung vom Sollwert des EHC-Gehalts zu reagieren. Auch ist eine Personalersparnis durch den Wegfall der häufigen manuellen Entnahme und Prüfung von Proben ermöglicht worden.

Die folgenden Beispiele veranschaulichen das Verfahren nach der Erfindung mehr im einzelnen.

Beispiel I

Ein Roh-Bisphenol A-diglycidyläther oder-Bisphenol F-diglycidyläther wird entweder rein oder in Form einer üblichen Lösung, die 3000 ppm EHC enthält, mit einer wässerigen, 50 Gew.-% NaOH enthaltenden Natriumhydroxidlösung kontinuierlich in stöchiometrischem Verhältnis in einer Rührreaktorkaskade bei einer Temperatur von I05°C gemischt. Die Menge Natriumhydroxidlösung ist so berechnet, daß das Epoxidharzendprodukt I50 bis 200 ppm EHC enthalten soll. Nach der obigen Reaktionsstufe wird das Epoxidharz bzw. seine Lösung gewaschen, um aus ihm ionisch gebundenes Chlor (Chloridanion) zu entfernen. Der Gesamtchlorgehalt des Endprodukts wird dann "halb-kontinuierlich", d.h. durch digitale Akkumulation der Testsignale während 3 Minuten, mit einem Wellenlängen-dispersiven Röntgenfluoreszenz-Analysator bei einer Temperatur von 88°C bestimmt. Hierauf wird die Meßzelle während 2 Minuten mit Methylisobutylketon gespült. Natürlich könnte an Stelle der digitalen Messung auch eine analoge Messung durchgeführt werden. Der gemessene Gesamtchlorwert liegt bei etwa I430 ppm (±25 ppm). Er wird als Dosierparameter zur Steuerung der zuzugebenden Menge an Natronlauge verwendet, um den EHC-Gehalt von 3000 ppm auf I65 ppm im Endprodukt zu reduzieren.

Beispiel 2

Eine 40% (Gewicht/Volumen)-ige Lösung von Roh-Tetrabrombisphenol A-diglycidyläther oder von Roh-Epoxycresolnovolak oder -Epoxyphenolnovolak in Toluol oder Methylisobutylketon und eine 5%-

bis 50%(Gewicht)-ige wässerige Natriumhydroxidlösung werden laufend in einen mehrstufigen Rührreaktor dosiert. Die Menge der Natronlauge wird so berechnet, daß das Epoxidharzendprodukt 50 bis 200 ppm EHC enthält.

Anschließend an diese Reaktionsstufe wird die laufend erhaltene Epoxidharzlösung gewaschen, um das im Harz gebildete ionisch gebundene Chlor daraus zu entfernen. Der Gesamtchlorgehalt des gewaschenen Endprodukts wurde dann halbkontinuierlich, d.h. mit Zwischenspülen alle 5 Minuten, mittels eines Röntgenfluoreszenz-Analysators bis 85°C bestimmt. Der gemessene Wert liegt bei etwa l3l0 ppm (±25 ppm) im laufend frisch anfallenden Harz und entspricht einem EHC-Wert des Harzes von 70 ppm. Der Testwert fur den Gesamtchlorgehalt dient als Dosierparameter für die zuzuführende Menge Natriumhydroxidlösung oder Kalium-tert.-butylatlösung, um den EHC-Gehalt von l000 ppm auf 70 ppm im Endprodukt zu senken.

Beispiel 3

Eine 60%-ige Lösung von festem Roh-Bisphenol A- oder -Bisphenol F-Epoxidharz, das etwa 400 ppm EHC enthält, in Methylisobutylketon oder Toluol wird in einem kontinuierlichen Reaktor laufend mit 30%-iger Natronlauge versetzt. Die Menge der Natronläuge wird so berechnet, daß der EHC-Gehalt im Endprodukt nur 30 bis l50 ppm betragen soll. Anschließend an die obige Reaktionsstufe wird die anfallende Harzlösung gewaschen, um das darin gebildete ionisch gebundene Chlor zu entfernen, worauf der Gesamtchlorgehalt des gewaschenen Endprodukts "halbkontinuierlich", d.h. alle 5 Minuten mit jeweils 2-Minuten Zwischenspülung mittels eines Röntgenfluoreszenz-Analysators bei 80°C bestimmt wird. Der erhaltene Wert liegt bei 900 ppm für das laufend frisch anfallende Harz und wird als Dosierparameter zur Steuerung der Zufuhr an Natronlauge verwendet, wobei der EHC-Gehalt von 400 ppm auf 50 ppm im Endprodukt gesenkt wird.

Beispiel 4

Ein Roh-Epoxidspezialharz (z.B. ein Butandioldiglycidäther),das etwa 700 ppm EHC enthält, und eine 50%-ige Natronlauge werden kontinuierlich in eine Rührreaktorkaskade bei l00°C dosiert und darin miteinander gemischt. Die Natronlauge wird so berechnet, daß der Sollgehalt des Epoxidharz-Endprodukts weniger als l00 ppm beträgt. Das aus der obigen Reaktionsstufe laufend anfallende Harz wird gewaschen, um das darin gebildete als Anion gebundene Chlor daraus zu entfernen, und der Gesamtchlorgehalt des gewaschenen Produkts wird dann mittels eines Röntgenfluoreszenz-Analysators bei 85°C bestimmt. Der gemessene Wert liegt bei 2200±30 ppm, was einem EHC-Gehalt von 80±30 ppm entspricht, und dient als Dosierparameter zur Steuerung der laufend zuzuführenden Menge an Natronlauge, um den EHC-Gehalt von 700 ppm auf 80 ppm im Endprodukt zu reduzieren.

Beispiel 5

Als Roh-Epoxidspezialharz wird ein Hexahydrophthalsäurediglycidylester, der etwa 700 bis l500 ppm EHC enthält, verwendet. Es wird wie in Beispiel 4 gearbeitet, aber statt Natronlauge wird festes Kaliumcarbonat oder eine Kaliumcarbonatlösung verwendet, und die gebildeten ChlorAnionen werden soweit erforderlich durch Filtration statt durch Waschen entfernt.

Der bei der Bestimmung des Gesamtchlorgehaltes des gefilterten oder gewaschenen Endproduktes gemessene Wert beträgt 6000±40 ppm und wird als Dosierparameter zur Steuerung der laufend zuzugebenden Kaliumcarbonatmenge verwendet, um den EHC-Gehalt auf l50±50 ppm im Endprodukt zu reduzieren.

Beispiel 6

Als Roh-Epoxidspezialharz wird ein l,3-Bis-(4-glycidyloxybenzal)-aceton verwendet, das etwa l500 ppm EHC enthält. Es wird wie in Beispiel 4 verfahren, aber statt 50%-iger Natronlauge wird 30%-ige Natronlauge verwendet, und das ionisch gebundene Chlor wird wie in Beispiel 2 entfernt.

Der bei der Bestimmung des Gesamtchlorgehaltes des Endproduktes gemessene Wert beträgt 2600±40 ppm und wird als Dosierparameter zur Steuerung der laufend zugeführten Natronlaugenmenge verwendet, um den EHC-Gehalt auf weniger als l00 ppm im Endprodukt zu reduzieren.

Beispiel 7

Als Roh-Epoxidspezialharz wird ein Hydantointriglycid, das etwa 2500 ppm EHC enthält, verwendet. Es wird wie in Beispiel 4 verfahren, aber statt Natronlauge wird festes Kaliumcarbonat oder Kaliumcarbonatlösung zugegeben; das ionisch gebundene Chlor wird soweit erforderlich durch Filtration statt durch Waschen entfernt.

Der bei der Bestimmung des Gesamtchlorgehaltes im gefilterten oder gewaschenen Endprodukt gemessene Wert beträgt 2300±30 ppm und wird als Dosierparameter zur Steuerung der laufend zuzugebenden Kaliumcarbonatmenge verwendet, um den EHC-Gehalt auf weniger als l00 ppm im Endprodukt zu reduzieren.

In den oben beschriebenen Beispielen können als Dehydrochlorierungsmittel neben Natriumhydroxid, Kaliumcarbonat und Kalium-tert.-butylat auch stöchiometrisch äquivalente Mengen von Lithiumhydroxid, Kaliumhydroxid, Calciumhydroxid, Kaliumhydrogencarbonat, Natriummethylat, Kaliumbutylat und quaternäre Ammoniumhydrogencarbonate der Formel:

$$R_4N^+ HCO_3^-,$$

worin R Alkyl, insbesondere niederes Alkyl von l bis 4 Kohlenstoffatomen bedeutet, verwendet werden.

**Patentansprüche**

1. Verfahren zur kontinuierlichen Herstellung eines Epoxidharzes von niedrigem EHC-Gehalt durch Reaktion eines Rohharzes von höherem EHC-Gehalt mit einem Dehydrochlorierungsmittel und laufendem Entfernen des sich dabei bildenden ionisch gebundenen Chlors aus dem Reaktionsprodukt, vorzugsweise durch Waschen oder Filtrieren des letzteren, dadurch gekennzeichnet, daß
(i) automatisch und kontinuierlich nur durch kurze periodische Intervalle unterbrochen der Gesamtchlorgehalt des frisch von ionisch gebundenem Chlor befreiten Epoxidharzes durch Bestrahlen einer intermittierend abgezweigten Menge des letzteren mit einer zur Fluoreszenz anregenden radioaktiven Strahlung in einer Bestrahlungszone (11) gemessen wird;
(ii) daß aus den laufend gemessenen Gesamtchlorgehalten Signale gebildet, akkumuliert und in EHC-Gehalte umgerechnet werden, und
(iii) daß die errechneten EHC-Werte als Dosierparameter zur laufenden Steuerung der Zufuhr an Dehydrochlorierungsmittel zum Reaktionsgemisch verwendet werden, wobei
(iv) alle anderen Parameter der Reaktion, insbesondere Druck, Temperatur, pH-Wert und Durchsatzraten konstant gehalten werden,
(v) daß in der Meßzelle (Z) ein Ueberdruck von mindestens 1 bar eingestellt wird und die Strömung des Epoxidharzes in der Meßzelle (Z) im wesentlichen laminar gehalten wird,
(vi) daß der Strömungsweg des Epoxidharzes in der Meßzelle (Z) und insbesondere die Bestrahlungszone (11) während der periodischen Intervalle zwischen den intermittierenden Messungen des Gesamtchlorgehalts zur Entfernung von in der genannten Zone abgesetzten Nebenprodukten, insbesondere Polymerisaten mit einer geeigneten Spülflüssigkeit gespült wird und
(vii) daß die Strahlenquelle (XR) und die Meßzelle (Z) in einer Kammer (H) angeordnet werden, die auch eine Detektoreinrichtung (D) für das Fluoreszenzsignal enthält, wobei die Kammer (H) vorzugsweise evakuiert wird, um störende Interferenzen zu unterdrücken.

2. Verfahren nach Anspruch 1, dadurch gekennzeichnet, daß jede Meßperiode höchstens 10 Minuten und jedes Spülungsintervall dazwischen mindestens 2 Minuten dauert.

3. Verfahren nach Anspruch 1 oder 2, dadurch gekennzeichnet, daß nach jeder Meßperiode die Zufuhr der abgezweigten Harzmenge zur Bestrahlungszone (II) unterbrochen und statt dessen ein Strom eines Spülmittels, vorzugsweise von Methylisobutylketon, Toluol, Aceton, Methanol oder Isopropanol während des Spülintervalls durch diese Zone geleitet wird.

4. Verfahren nach Anspruch 1, 2 oder 3, dadurch gekennzeichnet, daß die abgezweigte Harzmenge in der Bestrahlungszone auf einer Temperatur von mindestens 65°C und unter einem Überdruck von mindestens 1 bar gehalten wird.

5. Verfahren nach einem der Ansprüche 1 bis 4, dadurch gekennzeichnet, daß als Ausgangsmaterial ein roher Bisphenol A-diglycidyläther, Bisphenol F-diglycidyläther, Tetrabrombisphenol A-diglycidyläther, Epoxyphenolnovolak, Epoxycresolnovolak, festes Bisphenol A-Epoxidharz, festes Bisphenol F-Epoxidharz, Butandiol-diglycidyläther, Hexahydrophthalsäure-diglycidyläther, 1,3-Bis-(4-glycidyloxybenzal)-aceton oder Hydantointriglycid eingesetzt wird.

6. Verfahren nach einem der Ansprüche 1 bis 5, dadurch gekennzeichnet, daß als Dehydrochlorierungsmittel Natriumhydroxid, Kaliumhydroxid, Lithiumhydroxid, Calciumhydroxid, Kaliumcarbonat, Kaliumhydrogencarbonat, Natriummethylat, Kalium-n-butylat, Kalium-tert.-butylat oder ein quaternäres Ammoniumhydrogencarbonat der Formal $R_4N^+ HCO_3^-$, in der R Alkyl, vorzugsweise niederes Alkyl von 1 bis 4 Kohlenstoffatomen bedeutet, verwendet wird.

7. Verfahren nach einem der Ansprüche 1 bis 6, dadurch gekennzeichnet, daß nach einem der genannten Spülintervalle zur Eichung zwei Lösungen mit verschiedenen Chlorgehalten, von denen einer Null sein kann, durch die Bestrahlungszone geleitet werden, wobei das Lösungsmittel in den beiden Lösungen vorzugsweise Methylisobutylketon oder Isopropanol oder das erstere in der einen und das zweite in der anderen Lösung ist.

8. Kontrollsystem zur Bestimmung des Gesamtchlorgehalts eines Epoxidharzes und zur Steuerung der Zufuhr eines Dehydrochlorierungsmittels zum Harz, dadurch gekennzeichnet, daß das System
(1) einen Reaktor (R) zum Mischen von Roh-Epoxidharz mit dem Dehydrochlorierungsmittel und Reagieren vorzugsweise bei erhöhter Temperatur,

(2) eine Reinigungsstation (W) zum Entfernen von unter (1) gebildetem ionisch gebundenem Chlor aus dem aus Stufe (1) frisch erhaltenen Harz, vorzugsweise durch Waschen oder Filtrieren,
(3) eine Produktförderung (III) von Stufe (1) zu Stufe (2);
(4) eine Hauptausgabeleitung (IV) für gereinigtes Epoxidharz von reduziertem EHC-Gehalt aus Stufe (2),
(5) eine aus der Hauptausgabeleitung abgezweigte, Ventil-gesteuerte Zweigleitung (V) zur Förderung einer Teilmenge von gereinigtem Epoxidharz und, an diese angeschlossen,
(6) eine Chlorgehalt-Meßstation (A), die zum kontinuierlichen, nur von kurzen periodischen Intervallen unterbrochenen Messen des Gesamtchlorgehalts des durch die Hauptausgabeleitung (IV) weggeführten gereinigten Epoxidharzes geeignet ist und die
(6a) ein an eine Zweigleitung (V) für Epoxidharz mit zu messendem Gesamtchlorgehalt anschließbares Gehäuse (H);
(6b) einen an das Gehäuse (H) angeschlossenen Vakuumerzeuger ($P_2$) zur Erstellung eines Vakuums im Inneren (G) des Gehäuses (H);
(6c) eine Strahlenquelle (XR) für Fluoreszenz in Epoxidharz erzeugende radioaktive Strahlung;
(6d) eine im Gehäuse (H) untergebrachte, an die Zweigleitung (V) anschließbare Meßzelle (Z), die
(6d.1) ein eine Teilstrecke der Zweigleitung (V) darstellendes Kanalsystem (16-14-12-11-13-15-17) im Inneren der Meßzelle (Z) und
(6d.2) ein einen Teilraum (11) des Kanalsystems gegen außen überdeckendes Meßzellenfenster (3), vorzugsweise aus Beryllium, enthält; wobei die Strahlenquelle (XR) im Gehäuseinneren (G) so angeordnet ist, daß ihre Strahlung in das Fenster (3) einfällt und im durch das Kanalsystem an der Unterseite des Fensters (3) entlang strömenden Epoxidharz eine Fluoreszenz der Chloratome anregt;
(6e) eine Detektoreinrichtung (D), welche die durch das Fenster (3) emittierte Fluoreszenz der Chloratome selektiert und daraus resultierende Signale abgibt; sowie
(6f) eine Rechnereinheit (SE) zum Empfang und zur Auswertung der Signale aus der Detektoreinrichtung (D) und zur Weitergabe von aus diesen Signalen ermittelten Dosiersignalen aufweist,
(7) eine Pumpeneinrichtung (PN) für die laufende Zufuhr von Dehydrochlorierungsmittel zum Reaktor (R), die in Uebereinstimmung mit den von der Recheneinheit (SE) an sie weitergegebenen Dosiersignalen gesteuert wird,
(8) eine Spülmittelquelle ($A_2$), die nach Abschalten der Zufuhr von Epoxidharz in die Zweigleitung (V) an das Kanalsystem der Meßzelle (Z) anschließbar ist und eine Spülflüssigkeit liefert, die beim Durchströmen durch die Zelle das Kanalsystem derselben und insbesondere die Unterseite des Fensters (3) von daran abgesetzten Nebenprodukten reinigt, und
(9) in der Zweigleitung (V) eine Förderpumpe (P) für Epoxidharz, die auf die den Teilraum (11) des Kanalsystems der Meßzelle (Z) durchströmende Teilmenge von Epoxidharz einen Druck von vorzugsweise mindestens 1 bar auszuüben vermag, umfaßt.

9. Kontrollsystem nach Anspruch 8, dadurch gekennzeichnet, daß im System mindestens zwei Quellen für Eichflüssigkeiten ($A_3$, $A_4$) verschiedener Chlorkonzentration, von denen eine Null sein kann, nach Abschalten der Zufuhr von Epoxidharz in die Zweigleitung (V) an das Kanalsystem der Meßzelle (Z) nacheinander anschließbar sind und jeweils eine der Eichflüssigkeiten liefern, die beim Vorbeiströmen am Meßzellenfenster (3) bei Bestrahlung durch die Strahlungsquelle (XR) jeweils feste Werte des Gesamtchlorgehalts zur Erstellung einer Eichgeraden emittieren.

10. Kontrollsystem nach Anspruch 8 oder 9, dadurch gekennzeichnet, daß eine Heizungseinrichtung (9) zum Heizen der Meßzelle (Z) an oder in dieser vorgesehen ist.

11. Kontrollsystem nach einem der Ansprüche 8 bis 10, dadurch gekennzeichnet, daß die Detektoreinrichtung (D) einen mit flüssiger Luft kühlbaren Halbleiterdetektor oder vorzugsweise einen Monochromator (M) und ein Proportionalzählrohr (PC) umfaßt.

12. Kontrollsystem nach einem der Ansprüche 8 bis 11, dadurch gekennzeichnet, daß das Meßzellenfenster (3) aus einer Berylliumplatte von 0,05 bis 0,5 mm, vorzugsweise um 0,1 mm Dicke besteht.

13. Kontrollsystem nach einem der Ansprüche 8 bis 12, dadurch gekennzeichnet, daß die Strahlenquelle (XR) aus einer Röntgenröhre oder einem Radionuklid, vorzugsweise Fe-55 besteht.

**Claims**

1. A process for continuously producing an epoxy resin of low EHC content by reacting a crude resin of fairly high EHC content with a dehydrochlorination agent and continuously removing the resulting ionically bound chlorine from the reaction product, preferably by washing or filtering the latter, characterised in that
(i) automatically and continuously, only interrupted by brief periodic intervals, the total chlorine content of the epoxy resin from which the ionically bound chlorine has been freshly freed is measured by irradiating an intermittently branched-off quantity of the former with fluorescence-exciting radioactive radiation in an irradiation zone (11);
(ii) that from the continuously measured total chlorine contents signals are formed, accumulated and converted into EHC contents, and

(iii) that the calculated EHC values are used as dosing parameters for the continuous control of the supply of dehydrochlorination agent to the reaction mixture, with
(iv) all the other parameters of the reaction, in particular pressure, temperature, pH value and throughput rates, being kept constant,
(v) that an overpressure of at least 1 bar is set in the measuring cell (Z) and the flow of the epoxy resin in the measuring cell (Z) is kept substantially laminar,
(vi) that the flow path of the epoxy resin in the measuring cell (Z) and in particular the irradiation zone (11) are rinsed with a suitable rinsing liquid during the periodic intervals between the intermittent measurements of the total chlorine content in order to remove by-products, in particular polymers, deposited in the afore-mentioned zone, and
(vii) that the radiation source (XR) and the measuring cell (Z) are located in a chamber (H) which also contains a detector unit (D) for the fluorescence signal, with the chamber (H) preferably being evacuated in order to suppress disturbing interference.

2. A process according to Claim 1, characterised in that each measurement period lasts for at most 10 minutes and each rinsing interval therebetween lasts for at least 2 minutes.

3. A process according to Claim 1 or 2, characterised in that after each measuring period the supply of the branched-off quantity of resin to the irradiation zone (11) is interrupted and instead of this a flow of a rinsing agent, preferably of methyl isobutyl ketone, toluene, acetone, methanol or isopropanol, is passed through said zone during the rinsing interval.

4. A process according to Claim 1, 2 or 3, characterised in that the branched-off quantity of resin is maintained at a temperature of at least 65°C and at an overpressure of at least 1 bar in the irradiation zone.

5. A process according to one of Claims 1 to 4, characterised in that a crude bisphenol A-diglycidyl ether, bisphenol F-diglycidyl ether, tetrabromobisphenol A-diglycidyl ether, epoxyphenol novolak, epoxycresol novolak, solid bisphenol A-epoxy resin, solid bisphenol F-epoxy resin, butanediol-diglycidyl ether, hexahydrophthalic acid diglycidyl ether, 1,3-bis-(4-glycidyloxybenzal)-acetone or hydantoin triglycide is used as the starting material.

6. A process according to one of Claims 1 to 5, characterised in that sodium hydroxide, potassium hydroxide, lithium hydroxide, calcium hydroxide, potassium carbonate, potassium hydrogen carbonate, sodium methylate, potassium n-butylate, potassium tert.-butylate or a quaternary ammonium hydrogen carbonate of the formula $R_4N^+ HCO_3^-$, in which R denotes alkyl, preferably lower alkyl of 1 to 4 carbon atoms, is used as the dehydrochlorination agent.

7. A process according to one of Claims 1 to 6, characterised in that after one of said rinsing intervals, for calibration two solutions having different chlorine contents, one of which may be zero, are passed through the irradiation zone, with the solvent in the two solutions preferably being methyl isobutyl ketone or isopropanol, or the former being in one solution and the latter being in the other solution.

8. A control system for determining the total chlorine content of an epoxy resin and for controlling the supply of a dehydrochlorination agent to the resin, characterised in that the system comprises
(1) a reactor (R) for mixing crude epoxy resin with the dehydrochlorination agent and reacting preferably at increased temperature,
(2) a washing station (W) for removing ionically bound chlorine formed under (1) from the resin freshly obtained from stage (1), preferably by washing or filtering,
(3) a product-conveying line (III) from stage (1) to stage (2);
(4) a main discharge line (IV) for washed epoxy resin of reduced EHC content from stage (2),
(5) a valve-controlled bypass line (V), branched off from the main discharge line, for conveying a partial amount of washed epoxy resin and, connected thereto,
(6) a chlorine content measuring station (A), which is suitable for the continuous measurement, only interrupted by short periodic intervals, of the total chlorine content of the washed epoxy resin which is carried away through the main discharge line (IV) and which comprises
(6a) a housing (H) which can be connected to a bypass line (V) for epoxy resin having a total chlorine content which is to be measured;
(6b) a vacuum producing means ($P_2$) connected to the housing (H) for producing a vacuum in the interior (G) of the housing (H);
(6c) a radiation source (XR) for radioactive radiation producing fluorescence in epoxy resin;
(6d) a measuring cell (Z) which is housed in the housing (H) and which can be connected to the bypass line (V), which contains
(6d.1) a channel system (16-14-12-11-13-15-17) in the interior of the measuring cell (Z) which represents a partial section of the bypass line (V) and
(6d.2) a measuring cell window (3), preferably made of beryllium, covering a partial space (11) of the channel system from the outside; with the radiation source (XR) being located in the interior (G) of the housing in such a manner that its radiation falls onto the window (3) and excites fluorescence of the chlorine atoms in the epoxy resin flowing through the channel system on the underside of the window (3);
(6e) a detector unit (D) which selects the fluorescence of the chlorine atoms emitted through the window (3) and emits signals resulting therefrom; and also

(6f) a computing unit (SE) for receiving and evaluating the signals from the detector unit (D) and for passing on dosing signals determined from these signals,
(7) pump means (PN) for continuously supplying dehydrochlorination agent to the reactor (R), which is controlled in line with the dosing signals passed on thereto by the computing unit (SE),
(8) a rinsing agent source ($A_2$) which after switching off the supply of epoxy resin into the bypass line (V) can be connected to the channel system of the measuring cell (Z) and supplies a rinsing liquid which when flowing through the cell cleans the channel system thereof and in particular the underside of the window (3) of by-products deposited thereon, and
(9) in the bypass line (V) a conveying pump (P) for epoxy resin which can exert a pressure of preferably at least 1 bar on the partial amount of epoxy resin flowing through the partial space (11) of the channel system of the measuring cell (Z).

9. A control system according to Claim 8, characterised in that in the system at least two sources of calibrating liquid ($A_3$, $A_4$) of different chlorine concentrations, one of which may be zero, after the supply of epoxy resin into the bypass line (V) has been cut off can be connected in series to the channel system of the measuring cell (Z), and each supply one of the calibrating liquids which when flowing past the measuring cell window (3) during irradiation by the radiation source (XR) each emit fixed values of the total chlorine content in order to draw up a straight calibration line.

10. A control system according to Claim 8 or 9, characterised in that a heating means (9) for heating the measuring cell (Z) is provided thereon or therein.

11. A control system according to one of Claims 8 to 10, characterised in that the detector unit (D) comprises a semiconductor detector which can be cooled with liquid air or preferably a monochromator (M) and a proportional counter (PC).

12. A control system according to one of Claims 8 to 11, characterised in that the measuring cell window (3) is made of a beryllium plate 0.05 to 0.5 mm, preferably about 0.1 mm, thick.

13. A control system according to one of Claims 8 to 12, characterised in that the radiation source (XR) consists of an X-ray tube or a radionuclide, preferably Fe-55.

**Revendications**

1. Procédé de préparation continue d'une résine époxy à faible teneur en EHC, par réaction d'une résine brute à teneur plus élevée en EHC avec un agent de déhydrochloration, et séparation en continu du chlore ioniquement lié qui se forme alors d'avec le produit de réaction, de préférence par lavage ou filtration de ce dernier, caractérisé en ce que
(i) de façon automatique et continue, avec seulement des interruptions de petits intervalles périodiques, on mesure la teneur totale en chlore de la résine époxy, fraîchement débarrassée du chlore ioniquement lié, par irradiation d'une quantité, prélevée par intermittence, de cette dernière avec une radiation radioactive engendrant une fluorescence, dans une zone (11) d'irradiation;
(ii) à partir des teneurs totales en chlore mesurées en continu, des signaux sont formés, accumulés et calculés en teneur en EHC, et
(iii) on utilise les valeurs calculées de teneur en EHC comme paramètres de dosage pour commander en continu l'admission de l'agent de déhydrochloration dans le mélange réactionnel,
(iv) tous les autres paramètres de réaction, en particulier la pression, la température, le pH et les débits, étant maintenus constants,
(v) on établit dans la cellule de mesure (Z) une surpression d'au moins 1 bar et l'écoulement de la résine époxy dans la cellule de mesure (Z) est maintenue pratiquement laminaire,
(vi) le chemin d'écoulement de la résine époxy dans la cellule de mesure (Z), et en particulier la zone (11) d'irradiation, est balayée avec un fluide de balayage approprié pendant les intervalles périodiques entre les mesures intermittentes de la teneur totale en chlore, afin d'enlever les sous-produits, en particulier les produits de polymérisation, déposés dans ladite zone, et
(vii) la source de radiations (XR) et la cellule de mesure (Z) sont disposées dans une chambre (H), qui renferme également un dispositif de détection (D) pour le signal de fluorescence, le vide étant de préférence établi dans la chambre (H) afin de supprimer les interférences gênantes.

2. Procédé conforme à la revendication 1, caractérisé en ce que chaque période de mesure dure au plus 10 minutes et chaque intervalle de balayage entre les périodes de mesure dure au moins 2 minutes.

3. Procédé conforme à la revendication 1 ou 2, caractérisé en ce que, après chaque période de mesure, on interrompt l'admission des quantités prélevées de résine dans la zone (11) d'irradiation et on fait passer à la place, dans cette zone, un courant d'un agent de balayage, de préférence méthyl-isobutylcétone, toluène, acétone, méthanol ou isopropanol, pendant l'intervalle de balayage.

4. Procédé conforme à la revendication 1, 2 ou 3, caractérisé en ce que les quantités de résine prélevées sont maintenues, dans la zone d'irradiation, à une température d'au moins 65°C et sous une surpression d'au moins 1 bar.

5. Procédé conforme à l'une des revendications 1 à 4, caractérisé en ce que l'on utilise, comme produit de départ, un éther diglycidylique de bisphénol A, un éther diglycidylique de bisphénol F, un éther diglycidylique de tétrabromobisphénol A, une résine novolac de phénol époxydée, une résine novolac de crésol époxydée, une résine solide époxy de bisphénol A, une résine solide époxy de bisphénol F, un éther diglycidylique de butanediol, un éther diglycidylique d'acide hexahydrophtalique, la 1,3-bis-(4-glycidyloxy-benzal)-acétone ou le triglycide d'hydantoïne, à l'état brut.

6. Procédé conforme à l'une des revendications 1 à 5, caractérisé en ce que l'on utilise, comme agent de déhydrochloration, l'hydroxyde de sodium, l'hydroxyde de potassium, l'hydroxyde de lithium, l'hydroxyde de calcium, le carbonate de potassium, l'hydrogénocarbonate de potassium, le méthylate de sodium, le n-butylate de potassium, le t-butylate de potassium ou un hydrogénocarbonate d'ammonium quaternaire de formule $R_4N^+HCO_3^-$, dans laquelle R représente un groupe alkyle, de préférence un groupe alkyle inférieur comportant de 1 à 4 atomes de carbone.

7. Procédé conforme à l'une des revendications 1 à 6, caractérisé en ce que, pour l'étalonnage, après l'un des intervalles de balayage mentionnés, on fait passer dans la zone d'irradiation deux solutions présentant des teneurs différentes en chlore, dont l'une peut être nulle, le solvant étant, dans les deux solutions, de préférence de la méthyl-isobutyl-cétone ou de l'isopropanol, ou bien de la première dans l'une des solutions et du second dans l'autre solution.

8. Système de régulation pour la détermination de la teneur totale en chlore d'une résine époxy et pour la commande de l'addition d'un agent de déhydrochloration à la résine, caractérisé en ce que le système comporte:

(1) un réacteur (R) pour le mélange de la résine époxy brute avec l'agent de déhydrochloration et la réaction, de préférence à température élevée,

(2) une station d'épuration (W) pour éliminer le chlore ioniquement lié, formé en (1), de la résine fraîchement obtenue dans l'étape (1), de préférence par lavage ou filtration,

(3) une alimentation (III) de produit de l'étape (1) vers l'étape (2);

(4) une conduite principale (IV) d'évacuation hors de l'étape (2), pour la résine époxy purifiée à teneur réduite en EHC,

(5) une dérivation (V), commandée par une soupape et branchée sur la conduite principale d'évacuation, pour le prélèvement d'une partie de la résine époxy purifiée, et, raccordée à cette dérivation,

(6) une station (A) de mesure de la teneur en chlore, appropriée pour la mesure en continu, interrompue seulement pendant de courts intervalles périodiques, de la teneur totale en chlore de la résine époxy purifiée transportée dans la conduite principale (IV) d'évacuation, et qui comporte

(6a) une enceinte (H) qui peut être raccordée à une dérivation (V) pour la résine époxy présentant une teneur totale en chlore à mesurer;

(6b) un dispositif ($P_2$) de mise sous vide, raccordé à l'enceinte (H), pour établir un vide à l'intérieur (G) de l'enceinte (H);

(6c) une source de radiation (XR) pour l'irradiation radioactive engendrant une fluorescence dans la résine époxy;

(6d) une cellule (Z) de mesure, disposée dans l'enceinte (H), qui peut être raccordée à la dérivation (V) et qui comporte

(6d.1) un système de canalisation (16–14–12–11–13–15–17) constituant une partie de la dérivation (V) à l'intérieur de la cellule (Z) de mesure et

(6d.2) une fenêtre (3) de cellule de mesure, de préférence en béryllium, qui recouvre un espace partiel (11) du système de canalisation et l'isole de l'extérieur; la source de radiation (XR) étant disposée à l'intérieur (G) de l'enceinte de telle sorte que son rayonnement tombe sur la fenêtre (3) et engendre une fluorescence des atomes de chlore dans la résine époxy qui s'écoule, par le système de canalisation, le long de la face inférieure de la fenêtre (3);

(6e) un dispositif détecteur (D) qui sélectionne la fluorescence des atomes de chlore, émise au travers de la fenêtre (3), et fournit à partir de là les signaux résultants; ainsi que

(6f) une unité de calcul (SE) pour recevoir et exploiter les signaux provenant du dispositif détecteur (D) et pour répercuter les signaux de dosage calculés à partir de ces signaux-là;

(7) un dispositif de pompage (PN) pour envoyer en continu l'agent de déhydrochloration dans le réacteur (R), qui est commandé conformément aux signaux de dosage qui lui sont envoyés par l'unité de calcul (SE),

(8) une réserve ($A_2$) d'agent de balayage, que l'on peut raccorder, après interruption de l'admission de résine époxy dans la dérivation (V), au système de canalisation de la cellule (Z) de mesure, et qui fournit un fluide de balayage qui, en parcourant la cellule, nettoie le système de canalisation lui-même, et en particulier la face inférieure de la fenêtre (3), et en enlève les sous-produits qui s'y sont déposés, et

(9) dans la dérivation (V), une pompe (P) de circulation pour la résine époxy, qui peut exercer une pression, de préférence d'au moins 1 bar, sur la quantité partielle de résine époxy qui parcourt l'espace partiel (11) du système de canalisation de la cellule (Z) de mesure.

9. Système de commande conforme à la revendication 8, caractérisé en ce que dans le système peuvent être raccordées, au système de canalisation de la cellule (Z) de mesure, l'une après l'autre, au moins deux réserves de fluides d'étalonnage ($A_3$, $A_4$) présentant des concentrations de chlore différents dont l'une peut être nulle, après interruption de l'admission de résine époxy dans la dérivation (V), et chacune de ces réserves fournit l'un des fluides d'étalonnage qui donnent respectivement, par irradiation par la source (XR) de radiation lors de leur passage devant la fenêtre (3) de la cellule de mesure, des valeurs stables de la teneur totale en chlore, pour l'établissement d'une courbe d'étalonnage.

10. Système de commande conforme à la revendication 8 ou 9, caractérisé en ce qu'un dispositif de chauffage (9) est disposé sur ou dans la cellule (Z) de mesure pour la chauffer.

11. Système de commande conforme à l'une des revendications 8 à 10, caractérisé en ce que le dispositif détecteur (D) comprend un détecteur à semi-conducteur, qui peut être refroidi par de l'air liquide, ou bien, de préférence, un monochromateur (M) et un tube compteur proportionnel (PC).

12. Système de commande conforme à l'une des revendications 8 à 11, caractérisé en ce que la fenêtre (3) de la cellule de mesure est constituée par une plaque de béryllium présentant une épaisseur de 0,05 à 0,5 mm, de préférence d'environ 0,1 mm.

13. Système de commande conforme à l'une des revendications 8 à 12, caractérisé en ce que la source de radiations (XR) est constituée d'un tube à rayons X ou par un radionucléïde, de préférence Fe-55.

Fig. 1

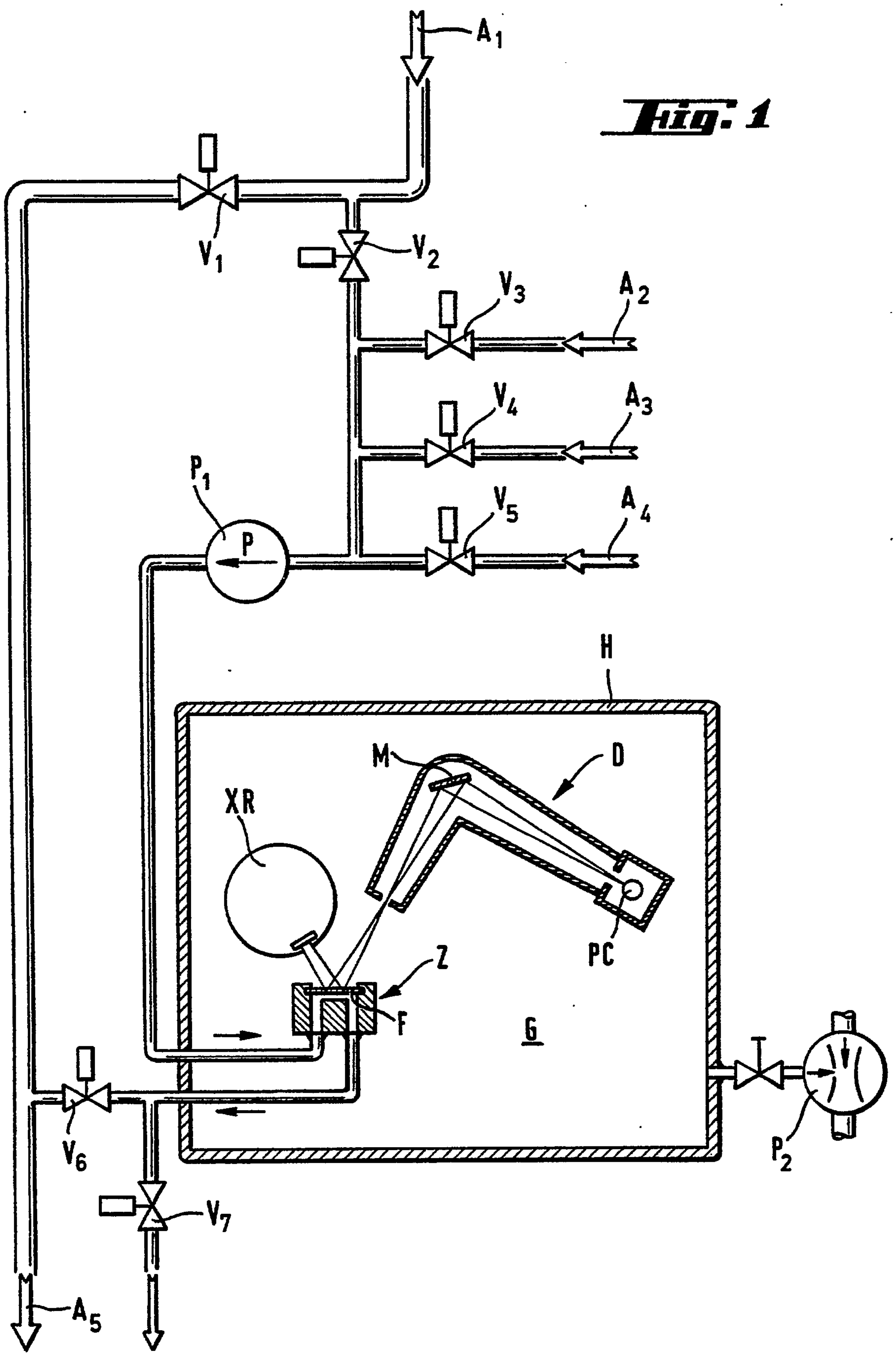

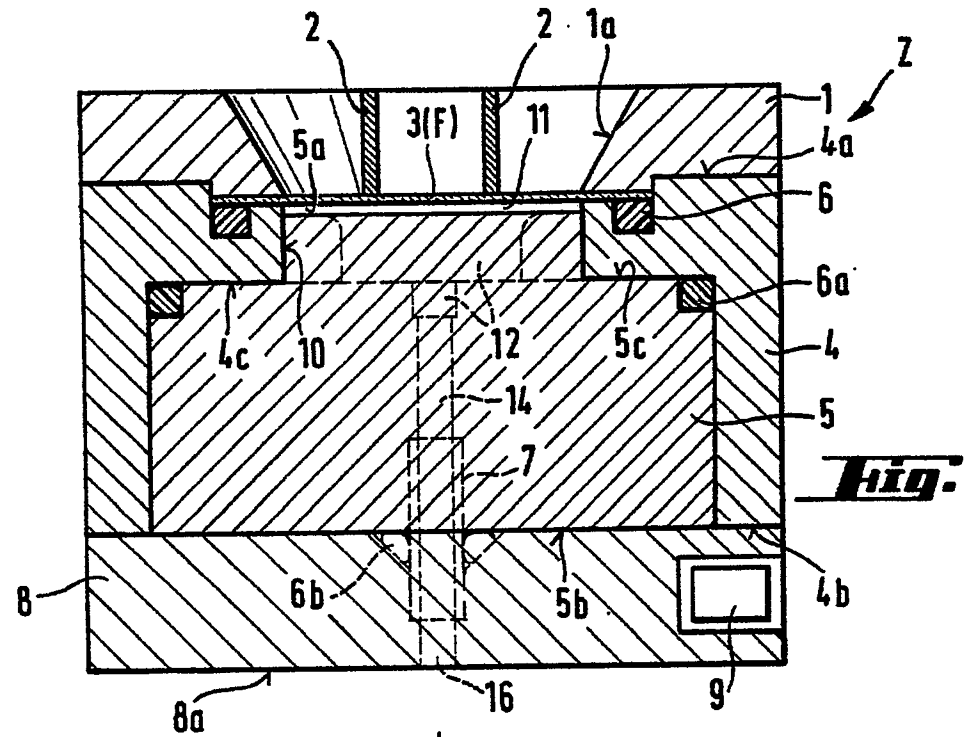
2
2
1a
Z
1
3(F)
11
5a
4a
6
6a
12
10
4c
5c
4
14
5
7
8
6b
5b
4b
9
16
8a

Fig. 3

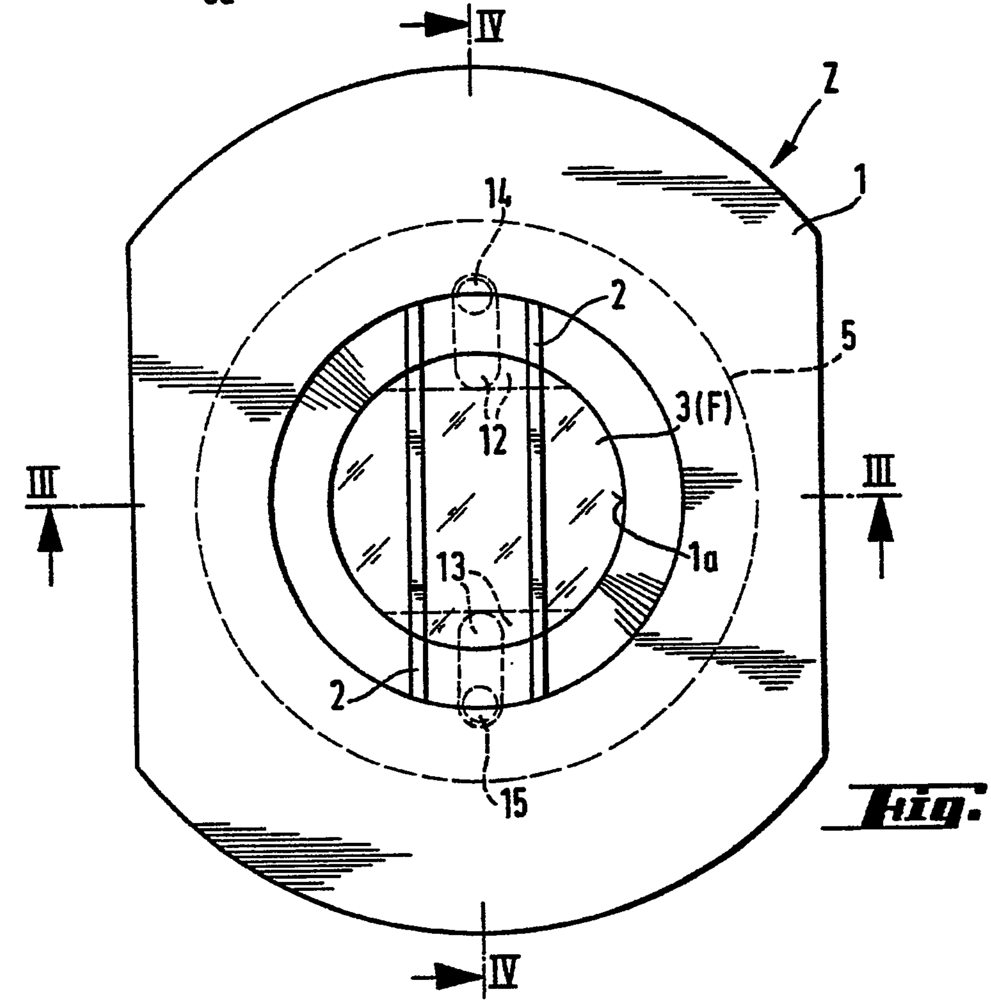
IV
Z
1
14
2
5
12
3(F)
III
III
1a
13
2
15
IV

Fig. 2

Fig. 4

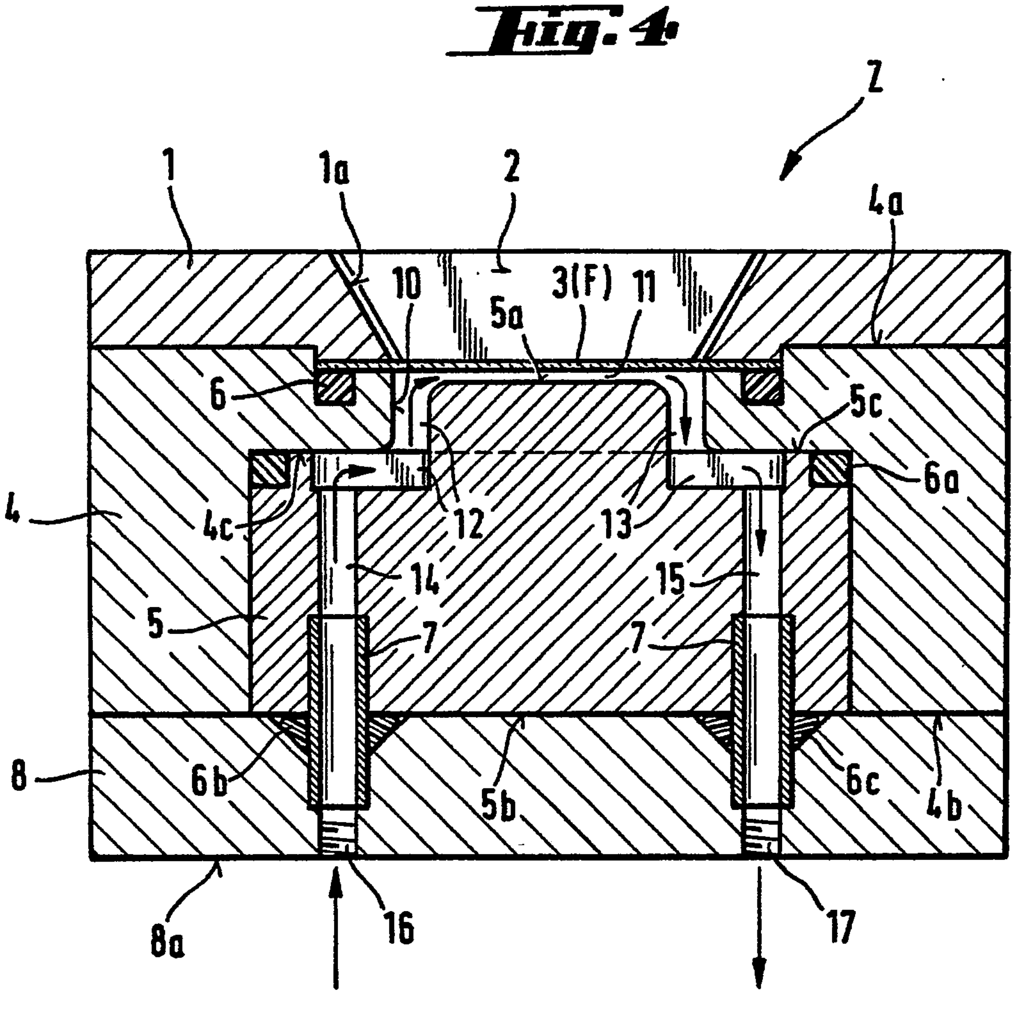

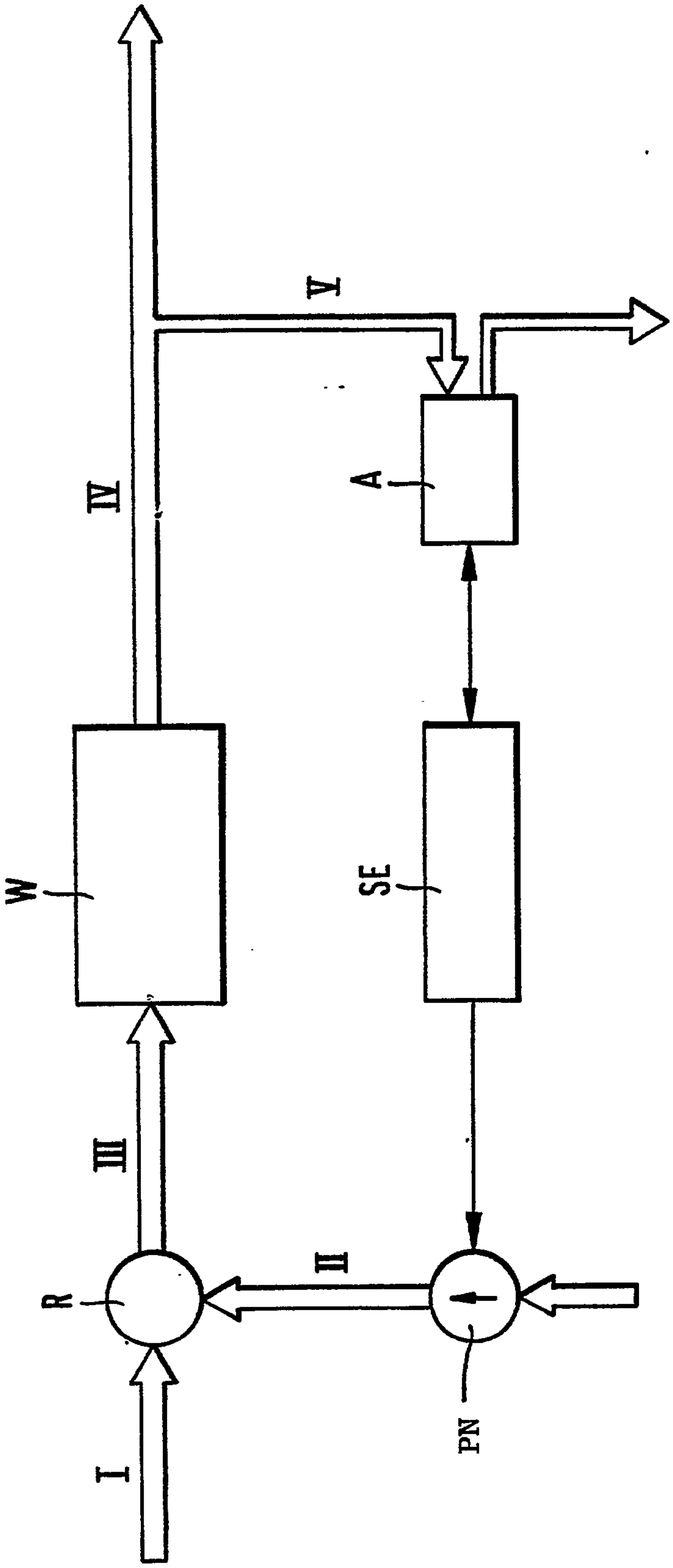


Fig. 5

Fig. 6 Stand der Technik

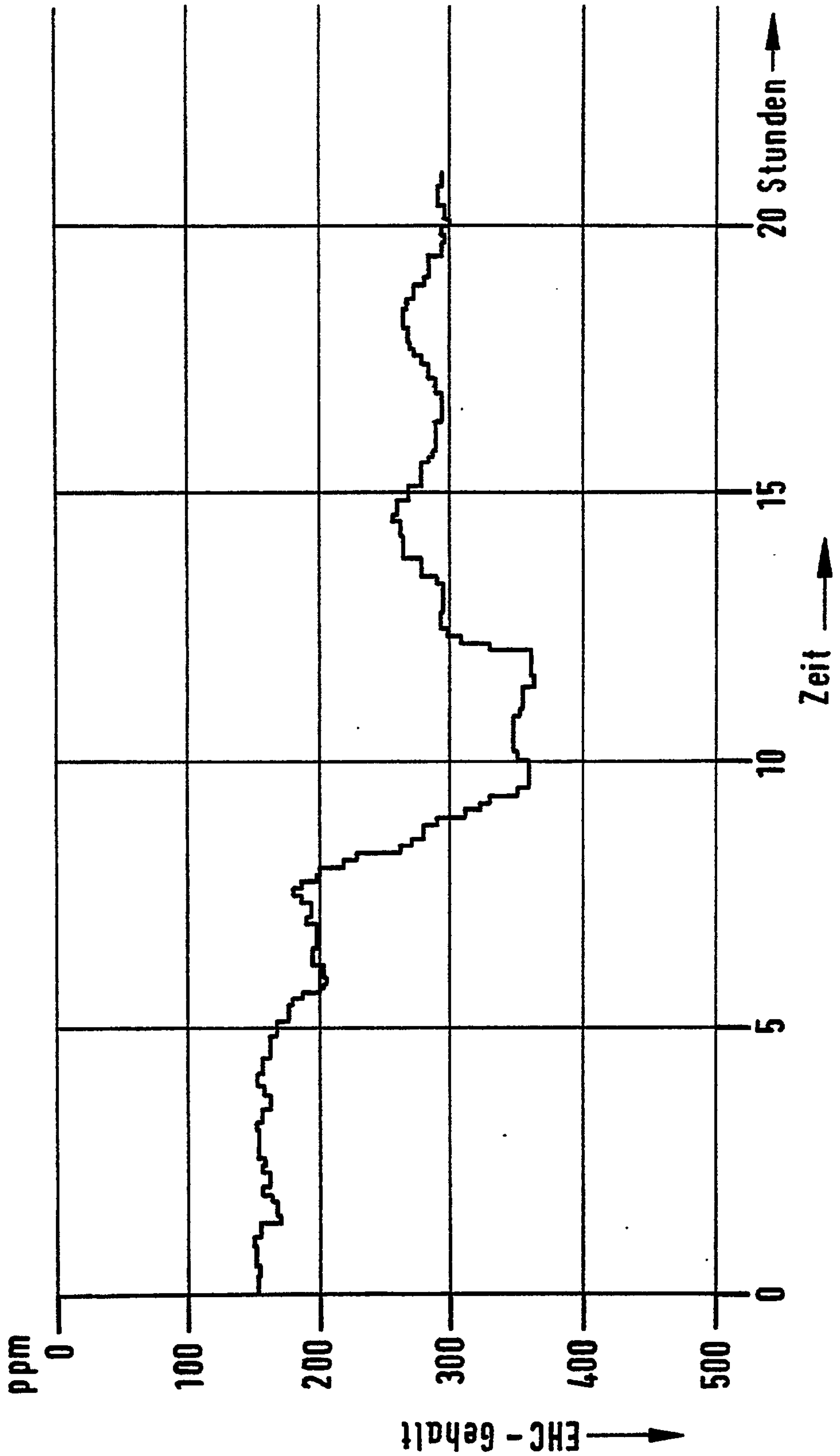

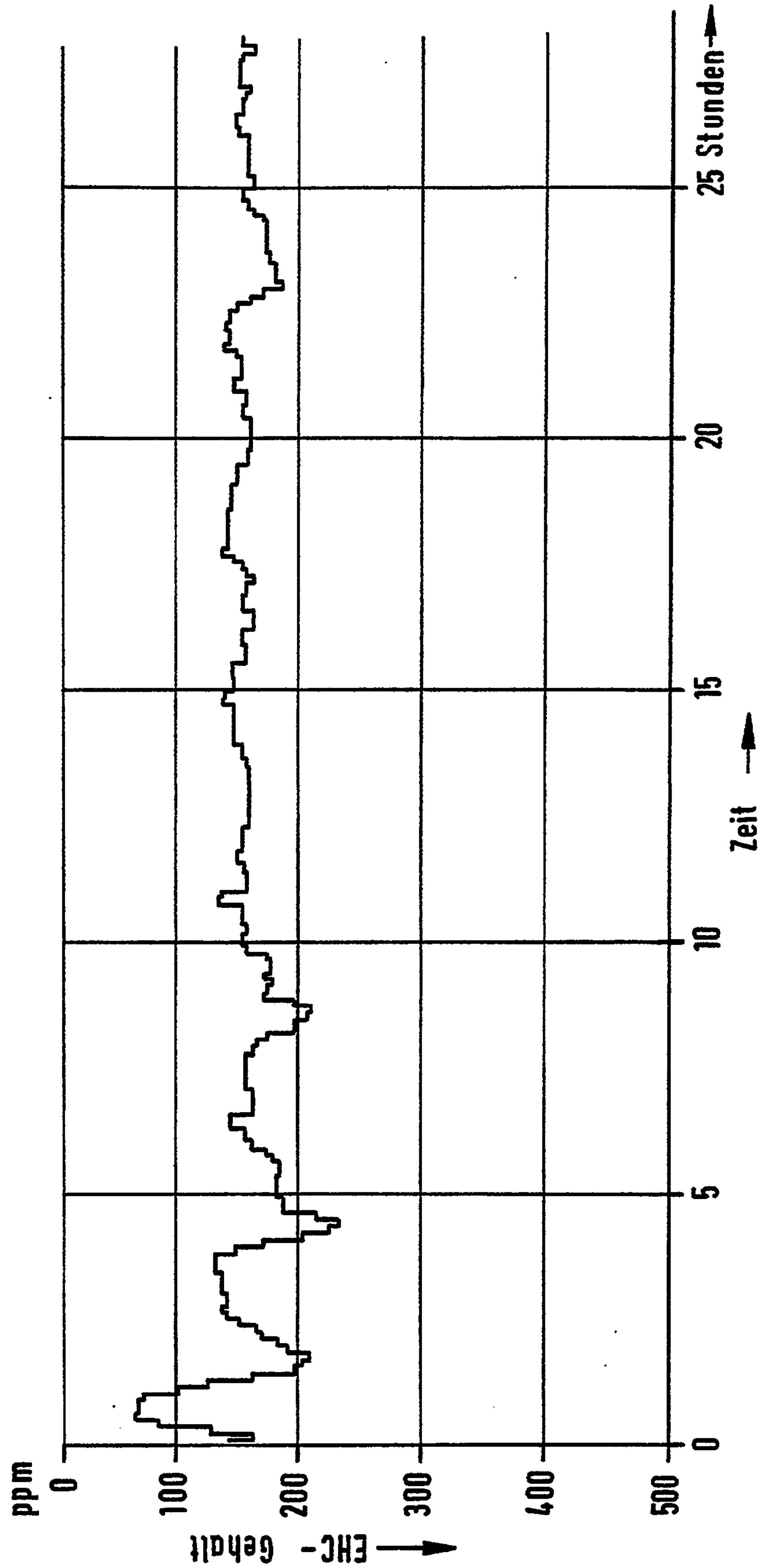


Fig. 1